(19) **Europäisches Patentamt European Patent Office Office européen des brevets**

(11) **EP 4 763 580 A1**

(12) **EUROPEAN PATENT APPLICATION**

(43) Date of publication:
24.06.2026 Bulletin 2026/26

(21) Application number: 25224987.5

(22) Date of filing: 18.12.2025

(51) International Patent Classification (IPC):
**B60L 3/00** (2019.01)   **B60L 7/08** (2006.01)
**B60L 7/26** (2006.01)   **B60L 15/20** (2006.01)

(52) Cooperative Patent Classification (CPC):
**B60L 3/0076; B60L 15/2018;** B60L 2220/42;
B60L 2240/12; B60L 2240/14; B60L 2240/26;
B60L 2240/421; B60L 2240/423; B60L 2240/461;
B60L 2240/642; B60L 2240/647; B60L 2240/80;
B60L 2250/26; Y02T 10/72

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 19.12.2024 CN 202411900050

(71) Applicant: **Huawei Technologies Co., Ltd.
Shenzhen, Guangdong 518129 (CN)**

(72) Inventors:
• **YANG, Peng**
  **Shenzhen, Guangdong, 518129 (CN)**
• **LU, Chunhong**
  **Shenzhen, Guangdong, 518129 (CN)**
• **SHEN, Tianmin**
  **Shenzhen, Guangdong, 518129 (CN)**
• **HE, Botao**
  **Shenzhen, Guangdong, 518129 (CN)**

(74) Representative: **Maiwald GmbH
Elisenhof
Elisenstraße 3
80335 München (DE)**

(54) **CONTROL METHOD FOR SEAMLESS BRAKING TO STOP OF ELECTRIC VEHICLE, VEHICLE CONTROLLER, AND ELECTRIC VEHICLED**

(57)     This application provides a control method for seamless braking to stop of an electric vehicle, a vehicle controller, and an electric vehicle, which are applied to the field of vehicle technologies, to reduce shaking of the electric vehicle during braking. At a first moment, four brake apparatuses of the electric vehicle are controlled to brake four wheels of the electric vehicle. After the first moment, a front drive motor is controlled to output front drive compensation torque, and a rear drive motor is controlled to output rear drive compensation torque. Directions of the front drive compensation torque and the rear drive compensation torque are the same as rotational speed directions of the wheels of the electric vehicle. Based on this, the front drive motor and the rear drive motor are controlled to output the compensation torque, to reduce a deceleration of the vehicle, thereby reducing shaking caused by a fast speed change rate of the electric vehicle during braking. In addition, the front drive motor and the rear drive motor are controlled collaboratively, to ensure that the electric vehicle does not shake additionally due to inaccurate torque compensation during braking, thereby improving driving and riding experience of a user.

EP 4 763 580 A1

**Description**

**TECHNICAL FIELD**

This application relates to the field of vehicle technologies, and in particular, to a control method for seamless braking to stop of an electric vehicle, a vehicle controller, and an electric vehicle.

**BACKGROUND**

With development of electric vehicles, driving and riding experience for the electric vehicle is increasingly concerned, where braking performance of the electric vehicle is a key factor that affects the driving and riding experience for the electric vehicle. During braking of the electric vehicle, the electric vehicle tends to shake, especially in a final braking stage, shaking is obvious.

When shaking during braking of the vehicle is reduced, a brake apparatus is controlled to release a specific wheel end braking force or a drive apparatus is controlled to output compensation torque, to reduce a deceleration of the vehicle. However, it is still difficult to completely avoid shaking of the electric vehicle during braking, resulting in affecting driving and riding experience of a user.

**SUMMARY**

This application provides a control method for seamless braking to stop of an electric vehicle, a vehicle controller, and an electric vehicle, to control a front drive motor and a rear drive motor of the electric vehicle during braking of the electric vehicle, so as to reduce shaking of the electric vehicle during braking, and improve driving and riding experience of a user.

To achieve the foregoing objectives, embodiments of this application provide the following technical solutions.

According to a first aspect, this application provides a control method for seamless braking to stop of an electric vehicle, where the control method is used to control a front drive motor and a rear drive motor of the electric vehicle during braking of the electric vehicle, to reduce shaking of the electric vehicle during braking, and the control method includes: controlling, at a first moment, four brake apparatuses of the electric vehicle to brake four wheels of the electric vehicle; and after the first moment, in a process in which the four brake apparatuses brake the four wheels of the electric vehicle, controlling the front drive motor to output front drive compensation torque, and controlling the rear drive motor to output rear drive compensation torque, where directions of the front drive compensation torque and the rear drive compensation torque are the same as rotational speed directions of the wheels of the electric vehicle.

In this embodiment of this application, during braking of the electric vehicle, a vehicle controller controls the front drive motor and the rear drive motor to output compensation torque whose direction is the same as the rotational speed directions of the wheels, to reduce a deceleration of the electric vehicle during braking, thereby reducing shaking caused by a fast speed change rate of the electric vehicle during braking. In addition, the front drive motor and the rear drive motor are controlled collaboratively, to ensure that the electric vehicle does not shake additionally due to inaccurate torque compensation during braking, thereby further reducing shaking of the electric vehicle during braking, and improving driving and riding experience of a user.

In an implementation, at a second moment after the first moment, a deceleration of the electric vehicle during braking is less than a preset deceleration and a vehicle speed is less than a preset vehicle speed.

During braking of the electric vehicle, if the deceleration of the electric vehicle during braking is less than the preset deceleration and the vehicle speed is less than the preset vehicle speed, it may be determined that a braking mode of the electric vehicle is a non-emergency braking mode and the electric vehicle is in a final braking stage, so that the front drive motor and the rear drive motor can be controlled to output the compensation torque.

In an implementation, at a second moment after the first moment, a decrease rate of a rotational speed of the front drive motor and/or the rear drive motor is less than a preset decrease rate, and the rotational speed of the front drive motor and/or the rear drive motor is less than a preset rotational speed.

During braking of the electric vehicle, if the decrease rate of the rotational speed of the front drive motor and/or the rear drive motor is less than the preset decrease rate and the rotational speed of the front drive motor and/or the rear drive motor is less than the preset rotational speed during braking of the electric vehicle, it may be determined that a braking mode of the electric vehicle is a non-emergency braking mode and the electric vehicle is in a final braking stage, so that the front drive motor and the rear drive motor can be controlled to output the compensation torque.

In an implementation, the control method specifically includes: controlling, at the second moment after the first moment, both the front drive motor to output the front drive compensation torque and the rear drive motor to output the rear drive compensation torque.

In the foregoing manner, when the braking mode of the electric vehicle is the non-emergency braking mode and the electric vehicle is in the final braking stage, in consideration of an external condition, traveling operating conditions (such as turning, acceleration, and deceleration) of the electric vehicle, and impact of load transfer of the electric vehicle on the electric vehicle, precise collaborative control is performed on time points at which the torque compensation starts to be performed on the front drive motor and the rear drive motor and allocation of torque compensation values between the front drive motor and the rear drive motor. It can be ensured that power output effect of front wheels is synchronized with that of rear vehicles in a compensation process, to ensure that the electric vehicle does not shake abnormally during braking due to inaccurate torque compensation, thereby reducing shaking of the electric vehicle during braking, and improving driving and riding experience of the user.

In this embodiment, when center of gravity distribution of the electric vehicle is stable, or when a difference between a load of a front axle and a load of a rear axle of the electric vehicle is less than a preset difference, the vehicle controller controls both the front drive motor to output the front drive compensation torque and the rear drive motor to output the rear drive compensation torque in the final braking stage in non-emergency braking, to reduce the deceleration of the electric vehicle, thereby reducing shaking of the electric vehicle caused by the fast speed change rate of the electric vehicle in the final braking stage. In addition, it can be ensured that power output effect of the front drive motor is synchronized with that of the rear drive motor, so that braking effect of the front wheels is coordinated with that of the rear wheels, thereby reducing shaking of the electric vehicle in the final braking stage, and improving driving and riding experience of the user.

In an implementation, the control method specifically includes: controlling, at the second moment after the first moment, the front drive motor to output the front drive compensation torque; and controlling, at a third moment after the second moment, the rear drive motor to output the rear drive compensation torque.

In this embodiment, when the electric vehicle has load transfer, or when the load of the front axle of the electric vehicle is greater than the load of the rear axle, the vehicle controller first controls, at the second moment, the front drive motor to output the front drive compensation torque, and then controls both the front drive motor and the rear drive motor to output the compensation torque, to reduce the deceleration of the electric vehicle, thereby reducing shaking caused by the fast speed change rate of the electric vehicle in the final braking stage. In addition, it can be ensured that power output effect of the front drive motor is synchronized with that of the rear drive motor, so that braking effect of the front wheels is coordinated with that of the rear wheels, thereby reducing shaking of the electric vehicle in the final braking stage, and improving driving and riding experience of the user.

In an implementation, the control method specifically includes: controlling, at the second moment after the first moment, the rear drive motor to output the rear drive compensation torque; and controlling, at a third moment after the second moment, the front drive motor to output the front drive compensation torque, where in the process in which the four brake apparatuses brake the four wheels of the electric vehicle, a coefficient of adhesion between the wheels of the electric vehicle and a road surface is less than a preset adhesion coefficient.

In this embodiment, when the electric vehicle has load transfer, or when the load of the rear axle of the electric vehicle is greater than the load of the front axle; or when the electric vehicle travels on a road surface with a low adhesion coefficient (for example, a snow surface or an ice surface), the vehicle controller first controls, at the second moment, the rear drive motor to output the front drive compensation torque, and then controls both the front drive motor and the rear drive motor to output the compensation torque, to reduce the deceleration of the electric vehicle, thereby reducing shaking caused by the fast speed change rate of the electric vehicle in the final braking stage. In addition, it can be ensured that power output effect of the front drive motor is synchronized with that of the rear drive motor, so that braking effect of the front wheels is coordinated with that of the rear wheels, thereby reducing shaking of the electric vehicle in the final braking stage, and improving driving and riding experience of the user.

In the foregoing manner, the vehicle controller performs precise collaborative control on the time points at which the torque compensation starts to be performed on the front drive motor and the rear drive motor and a torque allocation value, so that the compensation torque output by the front drive motor and the compensation torque output by the rear drive motor of the electric vehicle are more proper. This effectively avoids power output asynchronization caused by an individual difference (for example, different transmission ratios) between motors, and ensures that the electric vehicle does not shake additionally due to inaccurate torque compensation during braking, thereby reducing shaking of the electric vehicle during braking, and improving driving and riding experience of the user.

In an implementation, the control method specifically includes: in response to braking forces output by the four brake apparatuses to two front wheels being greater than braking forces output by the four brake apparatuses to two rear wheels during braking, controlling, after the first moment, the front drive compensation torque output by the front drive motor to be greater than the rear drive compensation torque output by the rear drive motor.

In an implementation, the control method specifically includes: in response to braking forces output by the four brake apparatuses to two rear wheels being greater than braking forces output by the four brake apparatuses to two front wheels during braking, controlling, after the first moment, the rear drive compensation torque output by the rear drive motor to be greater than the front drive compensation torque output by the front drive motor.

In the foregoing manner, the vehicle controller controls the front drive compensation torque output by the front drive motor to be associated with the braking forces output by the brake apparatuses to the two front wheels, and controls the rear drive compensation torque output by the rear drive motor to be associated with the braking forces output by the brake apparatuses to the two rear wheels. Therefore, the torque compensation allocation value is precisely controlled, so that an unstable factor caused by a braking force difference in the compensation process is effectively reduced, thereby reducing shaking of the electric vehicle during braking, and improving driving and riding experience of the user.

In an implementation, the control method specifically includes: after the first moment, in a braking process in which the electric vehicle decelerates at a first deceleration, controlling the front drive motor to output first front drive compensation torque, and controlling the rear drive motor to output first rear drive compensation torque; and after the first moment, in a braking process in which the electric vehicle decelerates at a second deceleration, controlling the front drive motor to output second front drive compensation torque, and controlling the rear drive motor to output second rear drive compensation torque, where the first deceleration is less than the second deceleration, and a sum of the first front drive compensation torque and the first rear drive compensation torque is less than a sum of the second front drive compensation torque and the second rear drive compensation torque.

In the foregoing manner, when total compensation torque output by the front drive motor and the rear drive motor is controlled to increase as the deceleration increases, the front drive compensation torque output by the front drive motor and the rear drive compensation torque output by the rear drive motor can be precisely controlled, so that braking effect of the front wheels is coordinated with that of the rear wheels while the deceleration of the electric vehicle can be reduced, thereby reducing shaking of the electric vehicle during braking.

In an implementation, the control method further includes: controlling a suspension to increase damping at the second moment after the first moment. In this embodiment, when the front drive motor and the rear drive motor in a drive system output the compensation torque to reduce the deceleration of the electric vehicle, load transfer occurs on the electric vehicle. Therefore, when the vehicle controller indicates the front drive motor and the rear drive motor to output the compensation torque, the vehicle controller may further control a shock absorber to increase damping, so that the suspension system can provide damping compensation for the electric vehicle while the drive system provides the compensation torque for the electric vehicle, and the suspension can better suppress vibration of the electric vehicle, thereby further reducing shaking of the electric vehicle during braking.

In an implementation, the control method specifically includes: controlling a damping increased value of the suspension to increase as a sum of the front drive compensation torque and the rear drive compensation torque increases.

In the foregoing manner, when the suspension is controlled to increase damping, control setting of the damping increased value of the suspension helps accurately control the damping compensation on the suspension while the drive system provides the compensation torque for the electric vehicle.

When the front drive motor and the rear drive motor in the drive system output the compensation torque to reduce the deceleration of the electric vehicle, load transfer occurs on the electric vehicle. Therefore, when the vehicle controller indicates the front drive motor and the rear drive motor to output the compensation torque, the vehicle controller may further control a shock absorber to increase damping, so that a suspension system can provide damping compensation for the electric vehicle while the drive system provides the compensation torque for the electric vehicle, thereby further reducing shaking of the electric vehicle during braking.

In an implementation, the control method specifically includes: after the first moment, in response to the deceleration of the electric vehicle during braking being greater than or equal to the preset deceleration, controlling the sum of the front drive compensation torque output by the front drive motor and the rear drive compensation torque output by the rear drive motor to be zero.

In the foregoing manner, during braking of the electric vehicle, when the deceleration of the electric vehicle is greater than or equal to the preset deceleration, it indicates that a braking mode of the electric vehicle is emergency braking, that is, a vehicle speed of the electric vehicle needs to be rapidly reduced. When the braking mode of the electric vehicle is emergency braking, a braking response speed of the electric vehicle rather than braking comfort needs to be preferred. Therefore, in this case, the vehicle controller does not control the front drive motor and the rear drive motor to output the compensation torque, thereby ensuring the braking speed and braking safety of the electric vehicle.

According to a second aspect, an embodiment of this application provides a vehicle controller for seamless braking to stop control of an electric vehicle. The vehicle controller is configured to control a front drive motor of the electric vehicle to output torque to drive two front wheels of the electric vehicle and control a rear drive motor of the electric vehicle to output torque to drive two rear wheels of the electric vehicle, and the vehicle controller is specifically configured to: during braking of the electric vehicle, in response to a deceleration of the electric vehicle being less than a preset deceleration and a vehicle speed of the electric vehicle being less than a preset vehicle speed, control the front drive motor to output the front drive compensation torque, and control the rear drive motor to output the rear drive compensation torque.

In an implementation, the vehicle controller is specifically configured to: during braking of the electric vehicle, in response to the deceleration of the electric vehicle being less than the preset deceleration and the vehicle speed of the electric vehicle being less than the preset vehicle speed, control both the front drive motor to output the front drive compensation torque and the rear drive motor to output the rear drive compensation torque.

According to a third aspect, an embodiment of this application provides an electric vehicle, where the electric vehicle includes a front drive motor a rear drive motor, and the vehicle controller provided in the second aspect, and the vehicle controller is configured to control the front drive motor and the rear drive motor to perform the control method described in any one of the first aspect or the possible implementations of the first aspect.

For technical principles and technical effect of the second aspect and the third aspect, refer to the related description of the first aspect. Details are not described herein again.

**BRIEF DESCRIPTION OF DRAWINGS**

FIG. 1 is a diagram of an electric vehicle 1 according to an embodiment of this application;

FIG. 2 is a diagram of an architecture of an electric vehicle 1 according to an embodiment of this application;

FIG. 3(a), FIG. 3(b), and FIG. 3(c) are a diagram of an architecture of a drive system 100 according to an embodiment of this application;

FIG. 4 is a diagram of a control process of a vehicle control unit 510 of an electric vehicle 1 according to an embodiment of this application;

FIG. 5 is a diagram of a control process of a motor controller 110 of an electric vehicle 1 according to an embodiment of this application;

FIG. 6 is a diagram of operating of a braking control process of an electric vehicle 1 according to an embodiment of this application;

FIG. 7 is another diagram of operating of a braking control process of an electric vehicle 1 according to an embodiment of this application;

FIG. 8 is still another diagram of operating of a braking control process of an electric vehicle 1 according to an embodiment of this application; and

FIG. 9 is a diagram of operating of an electric vehicle 1 in an emergency braking mode according to an embodiment of this application.

**DESCRIPTION OF EMBODIMENTS**

The implementation and use of embodiments are discussed in detail below. It should be appreciated, however, that many applicable inventive concepts provided in this application may be implemented in a plurality of specific environments. The specific embodiments discussed are merely illustrative of specific ways to implement and use this application and this technology, and do not limit the scope of this application.

With development of electric vehicles, driving and riding experience for the vehicle is increasingly concerned, and braking performance of the vehicle is a key factor that affects the driving and riding experience for the vehicle. During braking of the vehicle, a final braking stage is a process of a vehicle speed of the vehicle from very small to zero, that is, a process of the vehicle from close to stop to complete stop, that is, no relative motion on the ground. During braking of the vehicle, a suspension of the vehicle is compressed under an action of deceleration. After vehicle braking ends, although the vehicle has actually stopped, a vehicle body of the vehicle rebounds under an action of the suspension. As a result, the vehicle shakes, and driving and riding experience of a user is affected.

In a possible implementation, a brake apparatus is controlled to release a wheel end braking force in the final braking stage of the electric vehicle, to reduce a deceleration of the electric vehicle, thereby suppressing shaking of the electric vehicle during braking. However, because a current seamless braking to stop algorithm has problems of a long wheel end signal transmission path and a long delay, braking performance of the electric vehicle may deteriorate.

In a possible implementation, seamless braking to stop control is performed on a drive motor of the electric vehicle in the final braking stage of the electric vehicle, and the drive motor is controlled to output drive torque to reduce a deceleration of the vehicle, thereby suppressing shaking of the electric vehicle during braking. However, when the electric vehicle includes a plurality of drive motors, when independent drive control is performed on each drive motor, there is a problem that drive control instructions of the plurality of motors are not synchronized. In particular, when transmission ratios of different motors are different, asynchronization between the plurality of motors is more obvious. It is difficult to achieve ideal driving compensation effect for the vehicle, and even the vehicle may shake additionally.

To resolve the foregoing problem, embodiments of this application provide a control method for seamless braking to stop of an electric vehicle and a vehicle controller of the electric vehicle. During braking of the electric vehicle, a front drive motor and a rear drive motor of the electric vehicle are controlled to reduce shaking of the electric vehicle during braking.

The following describes technical solutions of embodiments in this application with reference to accompanying drawings.

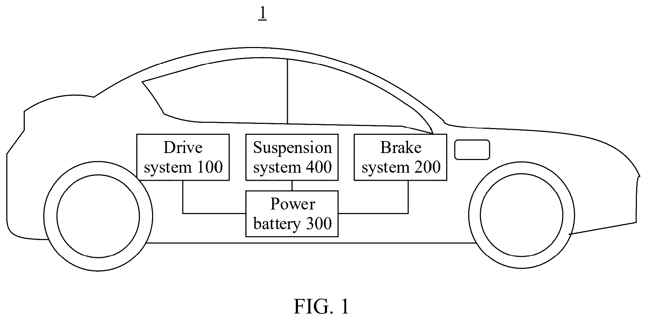

FIG. 1 is a diagram of an electric vehicle 1 according to an embodiment of this application. As shown in FIG. 1, the electric vehicle 1 includes a drive system 100, a brake system 200, and a power battery 300. The power battery 300 is configured to supply power to the drive system 100 and the brake system 200.

An operating status of the electric vehicle 1 includes a drive state and a braking state. When the electric vehicle 1 is in the drive state, the drive system 100 is configured to receive power supply from the power battery 300 and provide drive torque whose direction is the same as wheel rotational speed directions for four wheels of the electric vehicle 1, so that the electric vehicle 1 travels under driving of the drive torque. When the electric vehicle 1 is in the braking state, the brake system 200 is configured to receive power supply from the power battery 300 and provide braking forces whose directions are opposite to the wheel rotational speed directions for the four wheels of the electric vehicle 1, so that the electric vehicle 1 decelerates or stops under an action of the braking forces.

It may be understood that the electric vehicle 1 in this embodiment of this application may be specifically any one of different types of vehicles such as a car, a truck, and a passenger bus, or may be a transportation apparatus for carrying people or goods, for example, a tricycle, a two-wheeled vehicle, or a train, or another type of transportation means driven by a power battery. This is not limited herein. The vehicle includes but is not limited to a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), a new energy vehicle (new energy vehicle, NEV), and the like.

It may be understood that the power battery 300 in this embodiment of this application may be a lithium-ion battery, a lithium metal battery, a lead-acid battery, a nickel-cadmium battery, a nickel-hydrogen battery, a lithium-sulfur battery, a lithium-air battery, a sodium-ion battery, or the like. This is not limited herein. In terms of a scale, the power battery 300 in this embodiment of this application may be an individual cell, or may be a battery module or a battery pack. This is not limited herein. The power battery 300 may further supply power to another electric device in the electric vehicle 1, for example, supply power to an in-vehicle air conditioner or in-vehicle player.

The electric vehicle 1 further includes a suspension system 400, and the power battery 300 is further configured to supply power to the suspension system 400. As an important part of the electric vehicle 1, the suspension system 400 connects a vehicle body and a plurality of wheels of the electric vehicle 1. The suspension system 400 is specifically configured to: transfer a force and torque between the wheels and the vehicle body, buffer impact caused by road surface bumps, attenuate vibration of the electric vehicle 1 during traveling, suppress shaking of the electric vehicle 1 during braking, and ensure that the wheels can keep good contact with a road surface under various conditions. In this way, riding comfort, control stability, and driving safety of the vehicle are ensured.

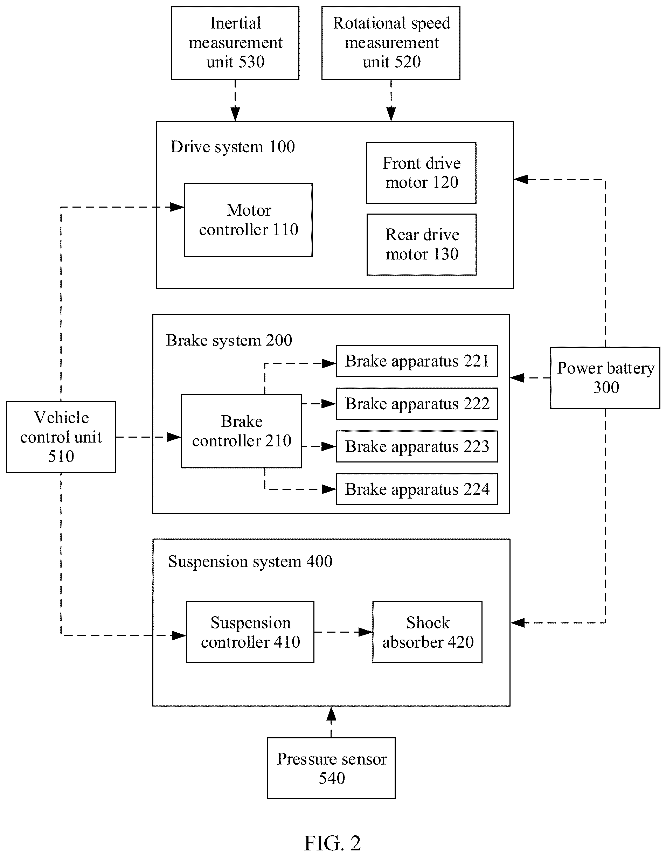

FIG. 2 is a diagram of an architecture of the electric vehicle 1 according to an embodiment of this application. The drive system 100, the brake system 200, and the suspension system 400 are communicatively connected to a vehicle control unit 510.

In an embodiment, the drive system 100 includes a motor controller 110, a front drive motor 120, and a rear drive motor 130. The motor controller 110 is configured to receive a direct current output by the power battery 300 and output an alternating current, to control the front drive motor 120 to output front drive torque and the rear drive motor 130 to output rear drive torque, so that four wheels of the electric vehicle 1 rotate under an action of the front drive torque and the rear drive torque.

The motor controller 110 in the drive system 100 may change magnetic field strength and a magnetic field direction of a stator by adjusting a magnitude of a current of a stator winding and a phase of a three-phase current, to change an interaction force (that is, the torque output by the motor) between the stator and a rotor. The motor controller 110 may further increase or decrease the drive torque output by the drive motor by changing a magnitude of a three-phase current output to the drive motor. The motor controller 110 may be a microcontroller unit (microcontroller unit, MCU), or the motor controller 110 may be an apparatus in which the microcontroller unit and the vehicle control unit 510 (vehicle control unit, VCU) are integrated. This is not limited herein.

The brake system 200 includes a brake controller 210, a brake pedal (not shown in FIG. 2), and four brake apparatuses, including a brake apparatus 221, a brake apparatus 222, a brake apparatus 223, and a brake apparatus 224. The four brake apparatuses are configured to brake the four wheels of the electric vehicle 1, and each brake apparatus is configured to brake one wheel of the electric vehicle 1. A user steps down the brake pedal of the electric vehicle 1, the brake controller 210 generates a braking signal based on a pedal stroke of the brake pedal or an opening of the brake pedal, and the four brake apparatuses output, based on a braking value indicated by the braking signal, braking forces to wheels corresponding to the electric vehicle 1, so that a vehicle speed of the electric vehicle 1 decreases. During braking of the electric vehicle 1, a larger stroke of the brake pedal (or a larger opening of the brake pedal) indicates a larger braking value indicated by the braking signal, and larger braking forces output by the four brake apparatuses, and a larger deceleration of the electric vehicle 1, that is, a faster decrease rate of the vehicle speed of the electric vehicle 1. The brake controller 210 in the brake system 200 may be a microcontroller unit or the vehicle control unit 510. The brake controller 210 and the motor controller 110 in the drive system 100 may be further integrated into a domain control unit (domain control unit, DCU) in the electric vehicle 1. This is not limited herein. The brake apparatus may be an electronic hydraulic brake (electronic hydraulic brake, EHB) apparatus, an electronic mechanical brake (electronic mechanical brake, EMB) apparatus, or another type of brake apparatus. This is not limited herein.

The suspension system 400 includes a suspension controller 410, an elastic element (not shown in FIG. 2), and a shock absorber 420. Adjusting damping of the suspension system 400 is adjusting damping of the shock absorber 420 in the suspension system 400. The elastic element is configured to support a vertical load, and suppress vibration and impact caused by an uneven road surface. The shock absorber 420 is configured to convert vibration energy into heat energy through flowing of oil or gas inside the shock absorber 420, and dissipate the heat energy, so that a vehicle body can quickly recover to a stable state. The shock absorber 420 mainly includes a cylinder, a piston, a piston rod, damping oil, and the like. The piston divides the cylinder into an upper chamber and a lower chamber. When the suspension of the electric vehicle 1 is impacted and the piston moves up and down in the cylinder, the damping oil flows between the two chambers through a valve on the piston. Damping of the shock absorber 420 may be adjusted by adjusting an opening of the valve. Larger damping of the shock absorber 420 indicates that the shock absorber 420 can more quickly suppress vibration generated after the elastic element bounces. In this case, the vehicle body quickly restores to a stable state. Smaller damping of the shock absorber 420 indicates longer duration of vibration generated after the elastic element bounces when the electric vehicle 1 passes through a bumped road surface. In this case, the vehicle body may continuously shake up and down.

In an embodiment, when the electric vehicle 1 is in a braking state, the vehicle control unit 510 calculates a torque requirement of the electric vehicle 1 based on a vehicle speed and a deceleration of the electric vehicle 1, and outputs a torque signal to the motor controller 110. The drive system 100 receives power supply from the power battery 300, and provides compensation torque whose direction is the same as rotational speed directions of wheels of the electric vehicle 1 for four wheels of the electric vehicle 1, so that the deceleration of the electric vehicle 1 during braking is reduced under an action of the compensation torque, thereby reducing shaking of the electric vehicle 1 during braking. The drive system 100 in this embodiment of this application may be specifically configured to allocate compensation torque required during braking to the front drive motor 120 and the rear drive motor 130 according to a preset ratio, that is, control the front drive motor 120 to output front drive compensation torque and control the rear drive motor 130 to output rear drive compensation torque, and make a sum of the front drive compensation torque and the rear drive compensation torque be total compensation torque of the drive system 100. Directions of the front drive compensation torque and the rear drive compensation torque are the same as the rotational speed directions of the wheels of the electric vehicle 1, so that the deceleration of the electric vehicle 1 during braking is reduced under an action of the front drive compensation torque and the rear drive compensation torque, thereby reducing shaking of the electric vehicle 1 during braking.

In an embodiment, when the electric vehicle 1 is in a braking state, the motor controller 110 controls the front drive motor 120 to output front drive compensation torque and controls the rear drive motor 130 to output rear drive compensation torque. When the front drive motor 120 and the rear drive motor 130 in the drive system 100 output the compensation torque to reduce the deceleration of the electric vehicle 1, load transfer occurs on the electric vehicle 1, that is, a load of a front axle 150 and a load of a rear axle 160 of the electric vehicle 1 change, for example, the load is transferred relative to the rear axle 160. As a result, it is difficult for the torque-compensated suspension system 400 to better suppress vibration of the electric vehicle 1. Therefore, when the vehicle control unit 510 indicates the motor controller 110 to control the front drive motor 120 and the rear drive motor 130 to output the compensation torque, the vehicle control unit 510 may further indicate the suspension controller 410 to control the shock absorber 420 to increase damping, so that the suspension system 400 can provide damping compensation for the electric vehicle 1 when the drive system 100 provides the compensation torque for the electric vehicle 1, thereby further reducing shaking of the electric vehicle 1 during braking.

In an embodiment, the electric vehicle 1 further includes a rotational speed measurement unit 520. The rotational speed measurement unit 520 is configured to detect a rotational speed of the front drive motor 120 and a rotational speed of the rear drive motor 130. The motor controller 110 is configured to adjust, based on the rotational speed of the front drive motor 120 and the rotational speed of the rear drive motor 130 that are detected by the rotational speed measurement unit 520, the front drive compensation torque that is allocated to the front drive motor 120 for output and the rear drive compensation torque that is allocated to the rear drive motor 130 for output. The rotational speed measurement unit 520 may be disposed on the front drive motor 120 and the rear drive motor 130 (for example, disposed on a rotor of the motor). In this case, the motor controller 110 may receive a resolver signal and a rotational speed signal of the front drive motor 120 and a resolver signal and a rotational speed signal of the rear drive motor 130 from the rotational speed measurement unit 520. For example, the rotational speed measurement unit 520 may be a resolver, a motor rotational speed sensor, or the like. The resolver is configured to detect a rotational speed and a rotor position of the front drive motor 120 and a rotational speed and a rotor position of the rear drive motor 130. The motor rotational speed sensor is configured to detect the rotational speed of the front drive motor 120 and the rotational speed of the rear drive motor 130. The rotational speed signal may be obtained indirectly from the resolver signal, and the rotational speed signal may be obtained by processing the resolver signal and calculating an angle variation in a unit time. A resolver acceleration signal (an angular acceleration signal) is a first-order derivative of the rotational speed signal with respect to time. The resolver acceleration signal (the angular acceleration signal) may be obtained by directly calculating the derivative of the rotational speed signal or by using a difference method to approximate the derivative.

The electric vehicle 1 further includes an inertial measurement unit 530, and the inertial measurement unit 530 is configured to detect an acceleration of the electric vehicle 1. The drive system 100 is configured to adjust, based on the acceleration that is of the electric vehicle 1 and that is detected by the inertial measurement unit 530, the front drive compensation torque that is allocated to the front drive motor 120 for output and the rear drive compensation torque that is allocated to the rear drive motor 130 for output.

In an embodiment, the electric vehicle 1 further includes a pressure sensor 540, where the pressure sensor 540 is configured to detect damping of the shock absorber 420. The pressure sensor 540 may be disposed in the shock absorber 420. When the suspension of the electric vehicle 1 is impacted, and the shock absorber 420 operates, the piston moves up and down in the cylinder, so that the damping oil flows through the valve on the piston, thereby generating a damping force. The pressure sensor 540 may capture a pressure change when the damping oil passes through the valve on the piston. A smaller opening of the valve indicates a larger pressure drop detected by the pressure sensor 540 when the damping oil passes through the valve on the piston, that is, greater damping of the shock absorber 420.

The drive system 100, the brake system 200, the suspension system 400, and the vehicle control unit 510 communicate with each other through a communication bus, and exchange signals. The communication bus includes a controller local area network (controller area network, CAN) bus, a local interconnect network (local interconnect network, LIN) bus, a high-speed fault-tolerant network protocol (flexray), or another type of bus. This is not limited herein.

In some implementations, the vehicle control unit 510 may obtain a driving mode signal through the communication bus. The driving mode signal is used to indicate a current driving mode of the electric vehicle 1. For example, the driving mode may include one or more of a sports mode, a comfort mode, and an intelligent mode.

In an embodiment, the drive system 100, the brake system 200, the suspension system 400, the vehicle control unit 510, and at least one sensor of the electric vehicle 1 are communicatively connected through the communication bus. In this manner, a plurality of signals can be transmitted on a same communication line, thereby greatly improving communication efficiency and reducing a large amount of separate wiring. For example, when the motor controller 110 is connected to the communication bus, the motor controller 110 may include a communication interface, and the communication interface may be connected to the communication bus. The motor controller 110 may obtain a signal from the communication bus through the communication interface. Signals of a plurality of sensors such as a wheel speed sensor, a temperature sensor, and a brake pedal position sensor in the electric vehicle 1 may be transmitted to the motor controller 110 through the bus. The motor controller 110 may obtain one or more signals of a vehicle speed, a torque signal, a braking signal, and the like from the communication bus. The motor controller 110 may also upload a signal to the communication bus, for example, one or more signals of a torque value and a torque direction of the front drive compensation torque output by the front drive motor 120, and a torque value and a torque direction of rear drive compensation torque output by the rear drive motor 130.

In an embodiment, the motor controller 110, the brake controller 210, and the suspension controller 410 are directly connected to a sensor. For some sensors that have extremely high requirements on signal stability and real-time performance, direct connection can reduce interference and a delay in a signal transmission process. For example, the motor controller 110 may be directly connected to the rotational speed measurement unit 520. The motor controller 110 may determine the vehicle speed of the electric vehicle 1, the acceleration (or the deceleration) of the electric vehicle 1, and the like based on the received resolver signal of the front drive motor 120 and the received resolver signal of the rear drive motor 130. The motor controller 110 may determine the rotational speed of the front drive motor 120 based on the received rotational speed signal of the front drive motor 120, and determine the rotational speed of the rear drive motor 130 based on the received rotational speed signal of the rear drive motor 130. Because the resolver signal can accurately reflect the rotational speed of the motor, for the electric vehicle 1, a rotational motion of the motor is transferred to the wheel via a transmission system, so that the electric vehicle 1 travels. Due to existence of a transmission ratio, there is a fixed ratio relationship between the rotational speed of the front drive motor 120/rear drive motor 130 and the wheel rotational speed. A wheel rotational speed may be calculated based on a resolver signal of any motor and a transmission ratio corresponding to the motor. The vehicle speed of the electric vehicle 1 is directly related to the wheel rotational speed, and the vehicle speed of the vehicle may be calculated based on the wheel rotational speed and a wheel-related parameter (for example, a wheel radius).

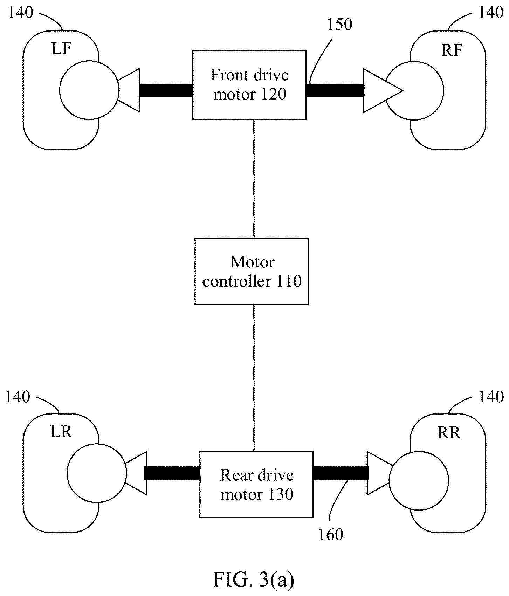

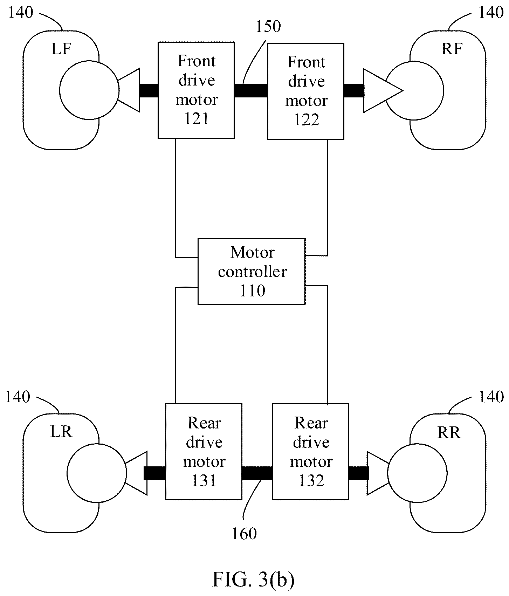

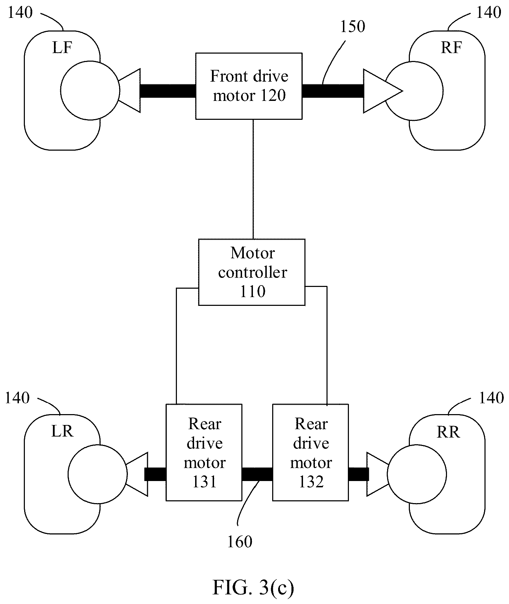

FIG. 3(a), FIG. 3(b), and FIG. 3(c) are a diagram of an architecture of the drive system 100 according to an embodiment of this application. As shown in FIG. 3(a), FIG. 3(b), and FIG. 3(c), the electric vehicle 1 further includes four wheels 140, that is, two front wheels and two rear wheels. The two front wheels corresponding to a front axle 150 of the electric vehicle 1 are a left front wheel LF and a right front wheel RF, and the two rear wheels corresponding to a rear axle 160 of the electric vehicle 1 are a left rear wheel LR and a right rear wheel RR.

The drive system 100 may be of a centralized drive architecture with drive motors, and two drive motors configured to drive the two front wheels or the two rear wheels are disposed together. The drive system 100 may alternatively be a wheel-side drive architecture with four drive motors. A drive motor is disposed at a wheel 140 driven by the drive motor, and is controlled by a separate motor controller 110. There may be one or more motor controllers 110. The motor controller 110 may one-to-one correspond to the drive motor, and one motor controller 110 may alternatively correspond to a plurality of drive motors. The motor controller 110 is configured to control one or more drive motors to output torque to drive the electric vehicle 1.

In an embodiment, as shown in FIG. 3(a), the drive system 100 may be a centralized drive architecture with drive motors. The drive system 100 includes a front drive motor 120, a rear drive motor 130, and one motor controller 110. The front drive motor 120 is configured to drive the left front wheel LF and the right front wheel RF that correspond to the front axle 150 of the electric vehicle 1, and the rear drive motor 130 is configured to drive the left rear wheel LR and the right rear wheel RR that correspond to the rear axle 160 of the electric vehicle 1. The motor controller 110 is configured to control the front drive motor 120 to output front drive torque, so that the two front wheels rotate under an action of the front drive torque. The motor controller 110 is further configured to control the rear drive motor 130 to output rear drive torque, so that the two rear wheels rotate under an action of the rear drive torque.

In an embodiment, the drive system 100 includes two motor controllers 110, and the two motor controllers 110 are respectively configured to control a front drive motor 120 and a rear drive motor 130.

In an embodiment, as shown in FIG. 3(b), the drive system 100 may alternatively be a wheel-side drive architecture with four drive motors. The drive system 100 includes a front drive motor 121, a front drive motor 122, a rear drive motor 131, a rear drive motor 132, and one motor controller 110. The front drive motor 121 is configured to drive the left front wheel LF of the electric vehicle 1, the front drive motor 122 is configured to drive the right front wheel RF of the electric vehicle 1, the rear drive motor 131 is configured to drive the left rear wheel LR of the electric vehicle 1, and the rear drive motor 132 is configured to drive the right rear wheel RR of the electric vehicle 1.

In an embodiment, the drive system 100 includes four motor controllers 110 and four drive motors. The motor controllers 110 one-to-one correspond to the drive motors. Each motor controller 110 is configured to control a drive motor corresponding to the motor controller 110 to output drive torque, so that each drive motor drives a wheel 140 corresponding to the drive motor.

In an embodiment, the drive system 100 may alternatively be shown in FIG. 3(c). One front drive motor 120 is used to drive the left front wheel LF and the right front wheel RF of the electric vehicle 1, and two rear drive motors are respectively used to drive the left rear wheel LR and the right rear wheel RR of the electric vehicle 1. A rear drive motor 131 is configured to drive the left rear wheel LR of the electric vehicle 1, and a rear drive motor 132 is configured to drive the right rear wheel RR of the electric vehicle 1.

In an embodiment, the drive system 100 may alternatively be combined with the plurality of the foregoing mentioned architectures. For example, a wheel-side drive motor architecture is used for front drive, and a centralized drive motor architecture is used for rear drive.

Braking of the electric vehicle 1 includes emergency braking and non-emergency braking. The emergency braking is a braking process in which the electric vehicle 1 quickly decelerates to stop. In the emergency braking process, a deceleration of the electric vehicle 1 is large. The non-emergency braking is a braking process in which the electric vehicle 1 slowly decelerates to stop. In the non-emergency braking process, a deceleration of the electric vehicle 1 is small. Whether a braking mode of the electric vehicle 1 is an emergency braking mode or a non-emergency braking mode may be determined based on the deceleration of the electric vehicle 1, a brake pedal stroke, a decrease rate of a rotational speed of the drive motor, or the like.

In an embodiment, during braking of the electric vehicle 1, when the deceleration of the electric vehicle 1 is greater than or equal to a preset deceleration, the braking mode of the electric vehicle 1 is the emergency braking mode. During braking of the electric vehicle 1, when the deceleration of the electric vehicle 1 is less than the preset deceleration, the braking mode of the electric vehicle 1 is the non-emergency braking mode. For example, the preset deceleration may be 5 $m/s^2$.

In an embodiment, during braking of the electric vehicle 1, when the decrease rate of the rotational speed of the front drive motor 120 and/or the rear drive motor 130 is greater than or equal to a preset rate, the braking mode of the electric vehicle 1 is the emergency braking mode. During braking of the electric vehicle 1, when the decrease rate of the rotational speed the front drive motor 120 and/or the rear drive motor 130 is less than the preset rate, the braking mode of the electric vehicle 1 is the non-emergency braking mode.

In an embodiment, during braking of the electric vehicle 1, when the brake pedal stroke of the electric vehicle 1 is greater than or equal to a preset value, the braking mode of the electric vehicle 1 is the emergency braking mode. During braking of the electric vehicle 1, when the brake pedal stroke of the electric vehicle 1 is less than the preset value, the braking mode of the electric vehicle 1 is the non-emergency braking mode.

In the emergency braking mode, it needs to be ensured that the electric vehicle 1 stops moving within a distance as short as possible, to avoid dangers such as collision and out-of-control of the electric vehicle 1. Therefore, in the emergency braking mode, braking efficiency and braking safety of the electric vehicle 1 need to be ensured. However, when the braking mode of the electric vehicle 1 is the non-emergency braking mode, while braking efficiency and braking safety of the electric vehicle 1 are considered, braking comfort of the electric vehicle 1 and driving and riding experience of a user may be further considered.

A final braking stage during braking is a process in which the electric vehicle 1 stops from a small speed. When the electric vehicle 1 is in the final braking stage, the vehicle speed of the electric vehicle 1 during braking is less than a preset vehicle speed, or the rotational speed of the front drive motor 120 and/or the rear drive motor 130 of the electric vehicle 1 during braking is less than a preset rotational speed. This is not limited herein.

In this embodiment of this application, when the electric vehicle 1 enters the final braking stage, and the braking mode of the electric vehicle 1 is the non-emergency braking mode, the front drive motor 120 of the electric vehicle 1 is controlled to output the front drive compensation torque, and the rear drive motor 130 is controlled to output the rear drive compensation torque, to reduce the deceleration of the electric vehicle 1 in the final braking stage, thereby reducing shaking of the electric vehicle 1 in the final braking stage, and improving driving and riding experience of the user.

The foregoing describes the architecture of this embodiment of this application. At a first moment, the brake controller 210 controls, in response to the braking value indicated by the braking signal, the four brake apparatuses to brake the four wheels 140 of the electric vehicle 1, where a direction of the braking force is the same as the rotational speed directions of the wheels 140 of the electric vehicle 1, so that the four wheels 140 of the electric vehicle 1 decelerate under an action of the braking force.

After the first moment, in a process in which the brake apparatuses brake the four wheels 140 of the electric vehicle 1, in response to the deceleration of the electric vehicle 1 during braking being less than a preset deceleration and the vehicle speed being less than a preset vehicle speed, that is, the electric vehicle 1 enters the final braking stage in the non-emergency braking mode, a main controller (the vehicle controller) is configured to control the front drive motor 120 to output front drive compensation torque, and control the rear drive motor 130 to output rear drive compensation torque, and directions of the front drive compensation torque and the rear drive compensation torque are the same as the rotational speed directions of the wheels 140 of the electric vehicle 1, to reduce the deceleration of the electric vehicle 1, thereby reducing shaking of the electric vehicle 1 in the final braking stage, and further improving driving and riding experience of the user.

In this implementation, the user may pre-select to enable a seamless braking to stop mode. A manner in which the user enables the seamless braking to stop mode includes: selecting to enable the seamless braking to stop mode in a human-vehicle interaction system; pressing a button of the seamless braking to stop mode to enable the seamless braking to stop mode; selecting to enable the seamless braking to stop mode in a terminal device that is wired or wirelessly connected to the electric vehicle 1, and the like. This is not limited herein. Whether the electric vehicle 1 enters the seamless braking to stop mode in the final braking stage in the non-emergency braking mode is determined by the user. The electric vehicle 1 automatically enters the seamless braking to stop mode when the electric vehicle 1 enters the final braking stage in the non-emergency braking mode based on that the user has pre-selected to enable the seamless braking to stop mode. In some embodiments, after the user selects to enable the seamless braking to stop mode, the electric vehicle 1 automatically enables the seamless braking to stop mode after being subsequently started, thereby simplifying user operations and improving use experience.

The following describes a control process of a braking control process of the main controller in the electric vehicle 1 by using an example. In this embodiment of this application, after the seamless braking to stop mode is enabled, and the brake controller 210 controls the four brake apparatuses to brake the four wheels 140 of the electric vehicle 1, the main controller (the vehicle controller) configured to implement the braking control process of the electric vehicle 1 may be the vehicle control unit 510, the motor controller 110, or the domain control unit. This is not limited herein.

In an embodiment, at a second moment after the first moment, when the deceleration of the electric vehicle 1 during braking is less than the preset deceleration and the vehicle speed is less than the preset vehicle speed, or the decrease rate of the rotational speed of the front drive motor 120 and/or the rear drive motor 130 is less than the preset decrease rate, and the rotational speed of the front drive motor 120 and/or the rear drive motor 130 is less than the preset rotational speed, it is determined that the electric vehicle 1 enters the final braking stage of the non-emergency braking mode at the second moment after continuous braking.

In an embodiment, at the second moment, the main controller is configured to control both the front drive motor 120 to output the front drive compensation torque and the rear drive motor 130 to output the rear drive compensation torque.

In an embodiment, at the second moment, the main controller is configured to control the front drive motor 120 to output the front drive compensation torque; and at a third moment after the second moment, the main controller is configured to control the rear drive motor 130 to output the rear drive compensation torque.

In an embodiment, at the second moment, the main controller is configured to control the rear drive motor 130 to output the rear drive compensation torque; and at a third moment after the second moment, the main controller is configured to control the front drive motor 120 to output the front drive compensation torque.

In any one of the foregoing embodiments, at the second moment after the first moment, after the main controller controls at least one of the front drive motor 120 and the rear drive motor 130 to output compensation torque, the suspension controller 410 controls the shock absorber 420 to increase damping, and controls a damping increased value of the shock absorber 420 to increase as a sum of the front drive compensation torque and the rear drive compensation torque (total compensation torque) increases, to further reduce shaking of the electric vehicle 1 in the final braking stage, thereby improving driving and riding experience of the user.

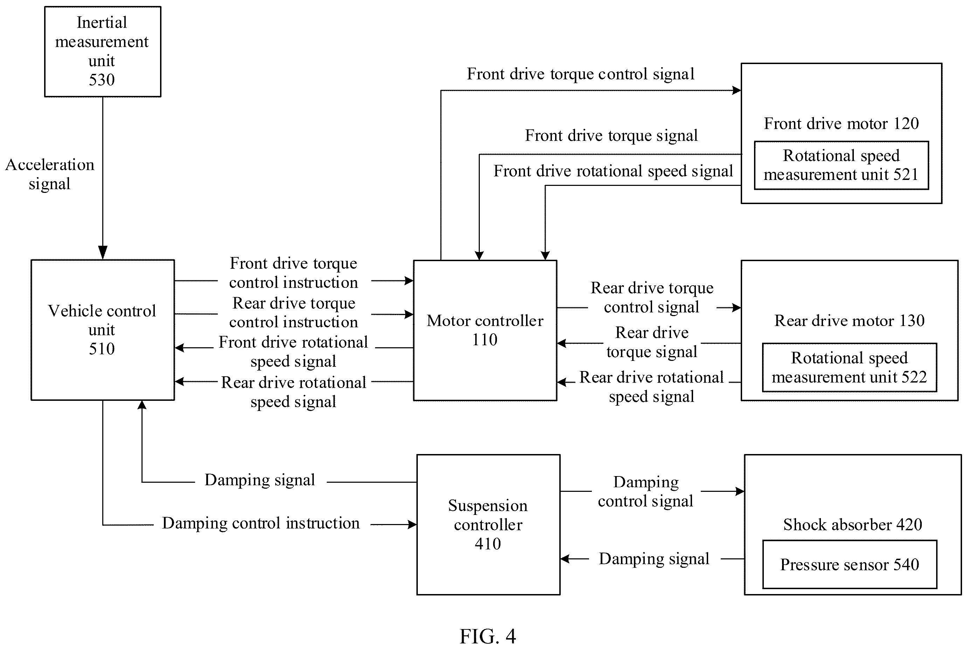

In an implementation, when the main controller configured to implement the braking control process of the electric vehicle 1 is the vehicle control unit 510, refer to FIG. 4. FIG. 4 is a diagram of the control process of the vehicle control unit 510 of the electric vehicle 1 according to an embodiment of this application. For example, the electric vehicle 1 is a two-drive vehicle shown in FIG. 3(a).

After the brake controller 210 controls the four brake apparatuses to brake the four wheels 140 of the electric vehicle 1, the inertial measurement unit 530 of the electric vehicle 1 sends a detected acceleration signal (used to indicate the deceleration of the electric vehicle 1) to the vehicle control unit 510.

The rotational speed measurement unit 521 of the front drive motor 120 sends a detected front drive rotational speed signal (used to indicate the rotational speed of the front drive motor 120) to the motor controller 110, the rotational speed measurement unit 522 of the rear drive motor 130 sends a detected rear drive rotational speed signal (used to indicate the rotational speed of the rear drive motor 130) to the motor controller 110, and the motor controller 110 forwards the front drive rotational speed signal and the rear drive rotational speed signal to the vehicle control unit 510.

The pressure sensor 540 of the shock absorber 420 sends a detected damping signal (used to indicate damping of the shock absorber 420) to the suspension controller 410, and the suspension controller 410 forwards the damping signal to the vehicle control unit 510.

After the first moment, if the vehicle control unit 510 detects that the deceleration of the electric vehicle 1 is less than the preset deceleration and the rotational speed of the front drive motor 120 and/or the rotational speed of the rear drive motor 130 are/is less than the preset rotational speed, it is determined that the electric vehicle 1 is in the non-emergency braking mode and the electric vehicle 1 is in the final braking stage.

The vehicle control unit 510 is configured to send a front drive torque control instruction (used to instruct a torque value of the front drive compensation torque) and a rear drive torque control instruction (used to instruct a torque value of the rear drive compensation torque) to the motor controller 110, so that the motor controller 110 outputs a front drive torque control signal according to the front drive torque control instruction to control the front drive motor 120 to output the front drive compensation torque, and outputs a rear drive torque control signal according to the rear drive torque control instruction to control the rear drive motor 130 to output the rear drive compensation torque, to reduce the deceleration of the electric vehicle 1.

The vehicle control unit 510 is further configured to send a damping control instruction (used to instruct a damping value) to the suspension controller 410 at the same time, so that the suspension controller 410 outputs a damping control signal according to the damping control instruction to control the shock absorber 420 to increase damping.

In FIG. 4, the vehicle control unit 510 is further configured to periodically receive a front drive torque signal, the front drive rotational speed signal, a rear drive torque signal, and the rear drive rotational speed signal that are returned by the motor controller 110. The vehicle control unit 510 adjusts, based on the front drive torque signal, the front drive rotational speed signal, the rear drive torque signal, and the rear drive rotational speed signal, the torque value that is of the front drive compensation torque and that is instructed by the front drive torque control instruction output to the motor controller 110 and the torque value that is of the rear drive compensation torque and that is instructed by the rear drive torque control instruction output to the motor controller 110. The vehicle control unit 510 is further configured to periodically receive the damping signal returned by the suspension controller 410 at the same time. The vehicle control unit 510 adjusts, based on the front drive torque signal, the front drive rotational speed signal, the rear drive torque signal, the rear drive rotational speed signal, and the damping signal, the damping value instructed by the damping control instruction output to the suspension controller 410.

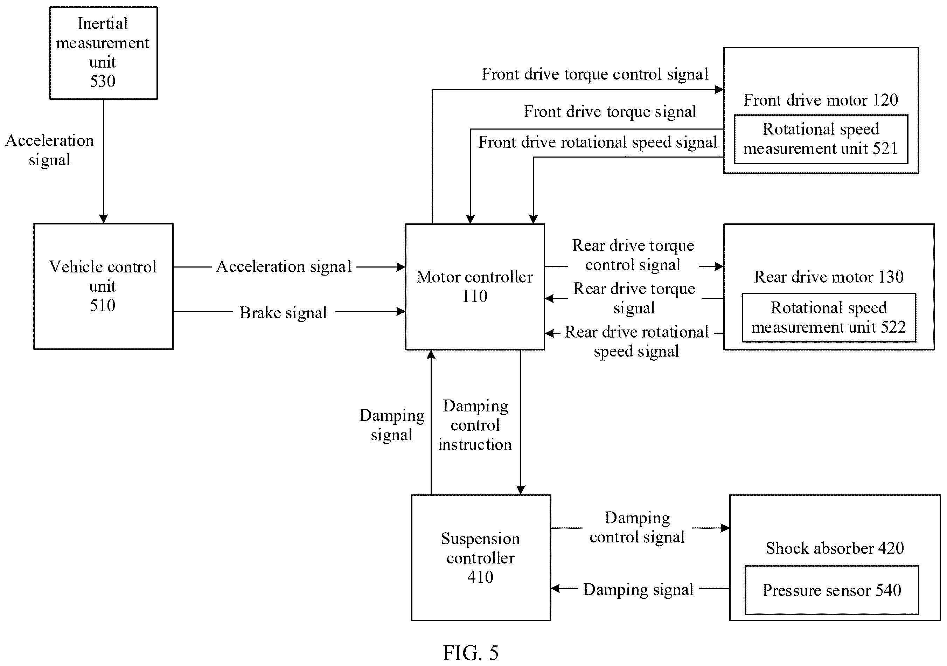

In an embodiment, when the main controller configured to implement the braking control process of the electric vehicle 1 is the motor controller 110, refer to FIG. 5. FIG. 5 is a diagram of the control process of the motor controller 110 of the electric vehicle 1 according to an embodiment of this application. For example, the electric vehicle 1 is a two-drive vehicle shown in FIG. 3(a).

After the brake controller 210 controls the four brake apparatuses to brake the four wheels 140 of the electric vehicle 1, the inertial measurement unit 530 of the electric vehicle 1 sends a detected acceleration signal (used to indicate the deceleration of the electric vehicle 1) to the vehicle control unit 510, and the vehicle control unit 510 forwards the acceleration signal to the motor controller 110.

The rotational speed measurement unit 521 of the front drive motor 120 sends a detected front drive rotational speed signal (used to indicate the rotational speed of the front drive motor 120) to the motor controller 110, the rotational speed measurement unit 522 of the rear drive motor 130 sends a detected rear drive rotational speed signal (used to indicate the rotational speed of the rear drive motor 130) to the motor controller 110.

The pressure sensor 540 of the shock absorber 420 sends a detected damping signal (used to indicate damping of the shock absorber 420) to the suspension controller 410, and the suspension controller 410 forwards the damping signal to the motor controller 110.

After the first moment, if the motor controller 110 detects that the deceleration of the electric vehicle 1 is less than the preset deceleration and the rotational speed of the front drive motor 120 and/or the rotational speed of the rear drive motor 130 are/is less than the preset rotational speed, it is determined that the electric vehicle 1 is in the non-emergency braking mode and the electric vehicle 1 is in the final braking stage.

The motor controller 110 is configured to send a front drive torque control signal (used to indicate a torque value of the front drive compensation torque) to the front drive motor 120 and send a rear drive torque control signal (used to indicate a torque value of the rear drive compensation torque) to the rear drive motor 130, so that the front drive motor 120 outputs the front drive compensation torque and the rear drive motor 130 outputs the rear drive compensation torque, to reduce the deceleration of the electric vehicle 1.

The motor controller 110 is further configured to send a damping control instruction (used to instruct a damping value) to the suspension controller 410 at the same time, so that the suspension controller 410 outputs a damping control signal according to the damping control instruction to control the shock absorber 420 to increase damping.

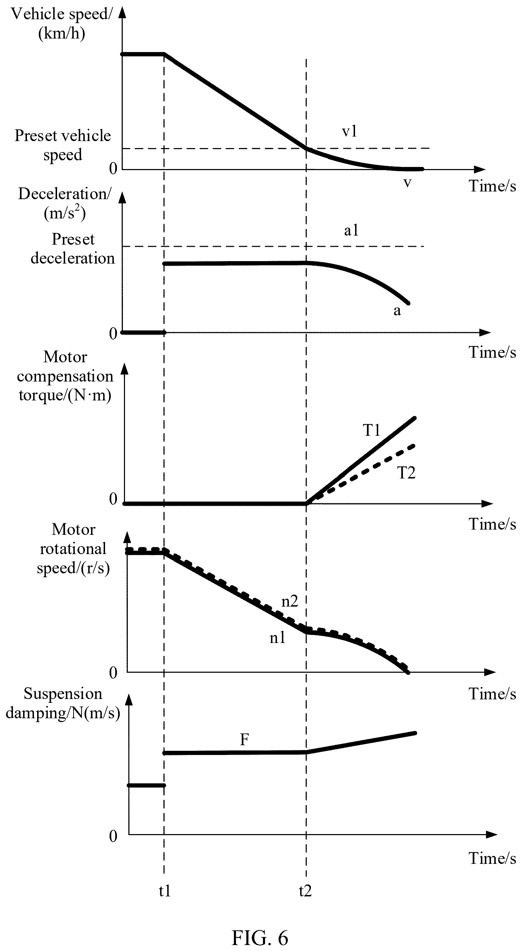

In FIG. 5, the motor controller 110 is further configured to periodically receive a front drive torque signal and the front drive rotational speed signal that are returned by the front drive motor 120, and a rear drive torque signal and the rear drive rotational speed signal that are returned by the rear drive motor 130, the motor controller 110 adjusts, based on the front drive torque signal, the front drive rotational speed signal, the rear drive torque signal, and the rear drive rotational speed signal, the torque value that is of the front drive compensation torque and that is indicated by the front drive torque control signal output to the front drive motor 120 and the torque value that is of rear drive compensation torque and that is indicated by the rear drive torque control signal output to the rear drive motor 130. The motor controller 110 is further configured to periodically receive the damping signal returned by the suspension controller 410 at the same time. The motor controller 110 adjusts, based on the front drive torque signal, the front drive rotational speed signal, the rear drive torque signal, the rear drive rotational speed signal, and the damping signal, the damping value instructed by the damping control instruction output to the suspension controller 410. With reference to FIG. 6 to FIG. 8, the following describes how the motor controller 110 specifically considers a plurality of factors to control the front drive motor 120, the rear drive motor 130, and the suspension to implement seamless braking to stop.

FIG. 6 is a diagram of operating of the braking control process of the electric vehicle 1 according to an embodiment of this application.

In a driving process of the electric vehicle 1, the electric vehicle 1 travels normally, the brake controller 210 controls braking forces output by the four brake apparatuses to be 0, and a deceleration a of the electric vehicle 1 is 0.

At a first moment t1, a user steps down the brake pedal, and the electric vehicle 1 enters a braking process. The brake controller 210 controls the four brake apparatuses to brake the four wheels 140 of the electric vehicle 1, and a vehicle speed v (a rotational speed n1 of the front drive motor 120 and a rotational speed n2 of the rear drive motor 130) of the electric vehicle 1 decreases under an action of the braking forces output by the brake system 200, a decrease rate of the rotational speed n1 of the front drive motor 120 and a decrease rate of the rotational speed n2 of the rear drive motor 130 increase as the braking forces increase. The brake controller 210 controls the braking forces output by the four brake apparatuses to increase as a pedal stroke of the brake pedal increases, and the deceleration a of the electric vehicle 1 during braking increases as the braking forces increase.

The motor controller 110 may receive a resolver signal of the front drive motor 120 and/or a resolver signal of the rear drive motor 130 from the rotational speed measurement unit 520, and obtain the vehicle speed v of the electric vehicle 1 based on the resolver signal. The motor controller 110 may further receive an acceleration signal of the electric vehicle 1 from the inertia detection unit, and obtain an acceleration (or the deceleration a) of the electric vehicle 1 based on the acceleration signal.

After the first moment t1, in the process in which the brake apparatuses brake the four wheels 140 of the electric vehicle 1, in response to the deceleration a of the electric vehicle 1 during braking being less than a preset deceleration a1 and the vehicle speed v being less than a preset vehicle speed v1, that is, the electric vehicle 1 enters a final braking stage in a non-emergency braking mode, the motor controller 110 is configured to control the front drive motor 120 to output front drive compensation torque T1, and control the rear drive motor 130 to output rear drive compensation torque T2, and directions of the front drive compensation torque T1 and the rear drive compensation torque T2 are the same as rotational speed directions of the wheels 140 of the electric vehicle 1, to reduce the deceleration a of the electric vehicle 1.

In a continuous braking process of the electric vehicle 1, as shown in FIG. 6, FIG. 6 shows a relationship between the vehicle speed v, the deceleration a, the rotational speed n1 of the front drive motor 120, the rotational speed n2 of the rear drive motor 130, the front drive compensation torque T1, the rear drive compensation torque T2, and suspension damping F of the electric vehicle 1 during braking.

At a second moment t2 after the first moment t1, if the motor controller 110 determines, based on the acceleration signal, that the deceleration a of the electric vehicle 1 during braking is less than the preset deceleration a1, it indicates that a braking mode of the electric vehicle 1 at the second moment t2 is the non-emergency braking mode. Because the vehicle speed v of the electric vehicle 1 gradually decreases in the continuous braking process, when it is determined that the electric vehicle 1 is in the non-emergency braking mode, if the motor controller 110 determines, based on the resolver signal, that the vehicle speed v of the electric vehicle 1 at the second moment t2 after the continuous braking is less than the preset vehicle speed v1, it indicates that the electric vehicle 1 is in the final braking stage at the second moment t2.

In this embodiment of this application, the motor controller 110 may control the front drive motor 120 and the rear drive motor 130 to generate compensation torque according to a preset ratio, and a sum of the front drive compensation torque T1 and the rear drive compensation torque T2 is total compensation torque output by the drive system 100.

The following describes a manner in which the motor controller 110 determines a magnitude of the total compensation torque output by the front drive motor 120 and the rear drive motor 130.

During braking of the electric vehicle 1, the electric vehicle 1 controls, based on the braking value indicated by the braking signal output by the vehicle control unit 510, the four brake apparatuses of the electric vehicle 1 to output the braking forces. However, in a process in which the motor controller 110 outputs the compensation torque, the motor controller 110 needs to determine, based on the vehicle speed v and/or the deceleration a of the electric vehicle 1, the total compensation torque output by the front drive motor 120 and the rear drive motor 130.

In an embodiment, the motor controller 110 controls the total compensation torque output by the front drive motor 120 and the rear drive motor 130 to increase as the deceleration a of the electric vehicle 1 increases. For example, at the second moment t2 after the first moment t1, in a braking process in which the electric vehicle 1 decelerates at a first deceleration, the motor controller 110 controls the front drive motor 120 to output first front drive compensation torque, and controls the rear drive motor 130 to output first rear drive compensation torque. At the second moment t2 after the first moment t1, in a braking process in which the electric vehicle 1 decelerates at a second deceleration, the motor controller 110 controls the front drive motor 120 to output second front drive compensation torque, and controls the rear drive motor 130 to output second rear drive compensation torque. The first deceleration is less than the second deceleration, and a sum of the first front drive compensation torque and the first rear drive compensation torque is less than a sum of the second front drive compensation torque and the second rear drive compensation torque.

sation torque.

In an embodiment, the motor controller 110 controls the total compensation torque output by the front drive motor 120 and the rear drive motor 130 to increase as a pedal stroke or a pedal opening of the brake pedal increases.

In an embodiment, the motor controller 110 may determine, according to a comfort braking curve corresponding to the electric vehicle 1 as a reference curve, the total compensation torque output by the front drive motor 120 and the rear drive motor 130. The comfort braking curve is a curve that describes an ideal deceleration a that changes with time during braking of the vehicle, to implement stable and comfortable braking of the electric vehicle 1. The motor controller 110 pre-determines the comfort braking curve of the electric vehicle 1. For example, a vehicle speed curve and/or a deceleration curve of the electric vehicle 1 in a process in which the electric vehicle 1 stops steadily through gradually loosening of the brake pedal during braking of the electric vehicle 1 are/is recorded, and an ideal vehicle speed curve and/or an ideal deceleration curve, that is, the comfort braking curve, of the electric vehicle 1 are drawn through a plurality of tests. The comfort braking curve of the electric vehicle 1 is used as a control basis, so that the electric vehicle 1 performs braking according to the comfort braking curve as much as possible during braking. This can not only improve comfort of a driver and a passenger, but also enhance safety and stability of vehicle braking.

During braking of the electric vehicle 1, the electric vehicle 1 may fail to decelerate according to the expected comfort braking curve due to torque interference from a transmission system or the motor of the electric vehicle 1, and the deceleration a of the electric vehicle 1 is inconsistent with the ideal deceleration corresponding to the comfort braking curve. For example, when the deceleration a of the electric vehicle 1 is greater than the ideal deceleration corresponding to the comfort braking curve, it indicates that the braking force of the electric vehicle 1 is too large. The motor controller 110 controls the front drive motor 120 and the rear drive motor 130 to output compensation torque whose direction is the same as the rotational speed directions of the wheels 140 of the electric vehicle 1, to reduce the deceleration a of the electric vehicle 1, so that the electric vehicle 1 performs braking according to the comfort braking curve.

At the second moment t2, the motor controller 110 determines the total compensation torque of the electric vehicle 1 based on the deceleration a of the electric vehicle 1 at the second moment t2 and an ideal deceleration that corresponds to the vehicle speed v of the electric vehicle 1 at the second moment t2 and that is in the comfort braking curve. A larger deceleration difference between the deceleration a of the electric vehicle 1 and the ideal deceleration corresponding to the comfort braking curve indicates larger total compensation torque output by the front drive motor 120 and the rear drive motor 130 under control of the motor controller 110.

Certainly, the total compensation torque may be calculated in another manner. This is not limited in this solution. The following describes a manner in which the motor controller 110 determines a magnitude of the front drive compensation torque T1 output by the front drive motor 120 and a magnitude of the rear drive compensation torque T2 output by the rear drive motor 130.

In an embodiment, when determining the total compensation torque output by the front drive motor 120 and the rear drive motor 130, the motor controller 110 controls, according to a preset ratio, the front drive motor 120 and the rear drive motor 130 to generate the compensation torque.

In an embodiment, a preset ratio between the front drive compensation torque T1 and the rear drive compensation torque T2 is a ratio between braking forces output by the four brake apparatuses to two front wheels and braking forces output by the four brake apparatuses to two rear wheels. For example, in response to the braking forces output by the four brake apparatuses to the two front wheels being greater than the braking forces output by the four brake apparatuses to the two rear wheels during braking, after the first moment t1, the front drive compensation torque T1 output by the front drive motor 120 is controlled to be greater than the rear drive compensation torque T2 output by the rear drive motor 130. In response to the braking forces output by the four brake apparatuses to the two rear wheels being greater than the braking forces output by the four brake apparatuses to the two front wheels during braking, after the first moment t1, the rear drive compensation torque T2 output by the rear drive motor 130 is controlled to be greater than the front drive compensation torque T1 output by the front drive motor 120.

In different traveling conditions, the torque compensation ratio between the front drive motor and rear drive motor also changes. For example, when the electric vehicle 1 goes uphill, because a center of gravity of the electric vehicle 1 moves backward, a load of the rear axle 160 increases. In this case, to reduce the deceleration a during braking, the rear drive compensation torque T2 that is output by the rear drive motor 130 and that is in the total compensation torque may need to be increased. On the contrary, when the electric vehicle 1 goes downhill, because the center of gravity of the electric vehicle 1 moves forward, a load of the front axle 150 increases. In this case, to reduce the deceleration a during braking, the front drive compensation torque T1 that is output by the front drive motor 120 and that is in the total compensation torque may need to be increased. In addition, in a turning process, loads of outer wheels 140 (for example, right wheels when the electric vehicle 1 turns to the left) of the electric vehicle 1 increase, and loads of inner wheels 140 decrease. In this case, if the deceleration a of the electric vehicle 1 during braking needs to be reduced, the torque compensation ratio of the drive motor needs to be dynamically adjusted based on a load change of the wheels 140. For example, in a left turning process, a torque compensation ratio between a right front wheel RF and a right rear wheel RR may increase, to better control a driving posture of the electric vehicle 1.

In an embodiment, a ratio between the front drive compensation torque T1 and the rear drive compensation torque T2 is calculated in the following manner:

$$\frac{T1}{T2} = \frac{T_{b1} + \alpha_1 \times J_1}{T_{b2} + \alpha_2 \times J_2}.$$

$\alpha_1$ is a resolver acceleration of the front drive motor 120; $\alpha_2$ is a resolver acceleration of the rear drive motor 130; $J_1$ is a rotation inertia of the front drive motor 120; $J_2$ is a rotation inertia of the rear drive motor 130; $T_{b1}$ is braking torque of the front axle 150; and $T_{b2}$ is braking torque of the rear axle 160.

For the same electric vehicle 1, the rotation inertia $J_1$ of the front drive motor 120 and the rotation inertia $J_2$ of the rear drive motor 130 of the electric vehicle 1 are usually fixed values, that is, a ratio between the front drive compensation torque T1 allocated by the motor controller 110 to the front drive motor 120 and the rear drive compensation torque T2 allocated by the motor controller 110 to the rear drive motor 130 is mainly affected by a ratio of the braking torque $T_{b1}$ applied to the front axle 150 and the braking torque $T_{b2}$ applied to the rear axle 160. In an ideal situation (without other external interference factors), the braking forces output by the brake apparatuses are forces directly applied by the brake system 200 (for example, brake calipers or brake discs) on rotating components of the wheels 140, and braking torque generated by the braking forces output by the brake apparatuses is a sum of the braking torque $T_{b1}$ applied to the front axle 150 and the braking torque $T_{b2}$ applied to the rear axle 160. However, due to various external factors (such as ground friction and vehicle load distribution), traveling conditions (such as turning, acceleration, and deceleration) and the like are applied to the wheels 140, so that actual braking torque of the wheels 140 is inconsistent with the braking torque of the brake apparatus. For example, loads of the electric vehicle 1 are uneven. For example, if a front part of the electric vehicle 1 has a large payload, a vertical load of the front axle 150 increases. During braking, the front axle 150 is affected differently by factors such as ground friction, so that actual braking torque $T_{b1}$ of the front axle 150 is increased. The motor controller 110 needs to increase a proportion of the front drive compensation torque T1 output by the front drive motor 120.

In an embodiment, a preset ratio between the compensation torque output by the front drive motor 120 and the compensation torque output by the rear drive motor 130 may be set randomly. For example, torque may be evenly or randomly allocated to the front drive motor 120 and the rear drive motor 130. This is not limited in this solution. In this way, flexibility of the motor control can be improved.

In an embodiment, the motor controller 110 may be further configured to obtain a pressure signal from the pressure sensor 540 disposed in the suspension system 400, to determine a load of the front axle 150 and a load of the rear axle 160 of the electric vehicle 1. During braking of the electric vehicle 1, when center of gravity distribution of the electric vehicle 1 is stable, for example, when the motor controller 110 determines, at the second moment t2, that a variation of the load of the front axle 150 and a variation of the load of the rear axle 160 of the electric vehicle 1 are less than a preset variation, or a difference between the load of the front axle 150 and the load of the rear axle 160 of the electric vehicle 1 is less than a preset difference, to implement stable and comfortable braking of the electric vehicle 1, the motor controller 110 controls, at the second moment t2, both the front drive motor 120 to output the front drive compensation torque T1 and the rear drive motor 130 to output the rear drive compensation torque T2, so that braking effect of the front wheels can be coordinated with that of the rear wheels while the deceleration a of the electric vehicle 1 is reduced, thereby avoiding excessive forward tilt or backward tilt.

As shown in FIG. 6, in an embodiment, at the second moment t2, the motor controller 110 controls both the front drive motor 120 to output the front drive compensation torque T1 and the rear drive motor 130 to output the rear drive compensation torque T2. Because directions of the front drive compensation torque T1 and the rear drive compensation torque T2 are the same as the rotational speed directions of the wheels 140 of the electric vehicle 1, the front drive compensation torque T1 and the rear drive compensation torque T2 enable the electric vehicle 1 to generate an acceleration, to reduce the deceleration a of the electric vehicle 1.

Specifically, the braking forces output by the four brake apparatuses at the second moment t2 are consistent with those at the first moment t1. Because the motor controller 110 controls, at the second moment t2, both the front drive motor 120 to output the front drive compensation torque T1 and the rear drive motor 130 to output the rear drive compensation torque T2, a decrease rate of the rotational speed n1 of the front drive motor 120 decreases under an action of the front drive compensation torque T1, and a decrease rate of the rotational speed n2 of the rear drive motor 130 decreases under an action of the rear drive compensation torque T2, that is, a decrease rate of the vehicle speed v of the electric vehicle 1 decreases, and the deceleration a of the electric vehicle 1 decreases.

In an embodiment, resolver signals are obtained by the resolver disposed on the front drive motor 120 and the resolver disposed on the rear drive motor 130, and then the vehicle speed v and the deceleration a of the electric vehicle 1 are determined based on the resolver signals, so that detection precision of the vehicle speed v and the deceleration a of the electric vehicle 1 can be improved. Because the resolver has a high sampling frequency, and the motor controller 110 can directly obtain the resolver signal of the front drive motor 120 and the resolver signal of the rear drive motor 130, a delay in obtaining the vehicle speed v and the deceleration a of the electric vehicle 1 by the motor controller 110 is reduced, so that the motor controller 110 can quickly determine the total compensation torque based on the vehicle speed v and the deceleration a of the electric vehicle 1, thereby reducing a control delay.

In an embodiment, the resolver signal obtained by the resolver is more sensitive than a vehicle speed v signal, but the resolver signal has large fluctuation. To obtain a more accurate vehicle speed v, with reference to a dynamic model of the vehicle, the rotational speed n1 of the front drive motor 120, the rotational speed n2 of the rear drive motor 130, and a measured vehicle speed v of the electric vehicle 1 are used as input quantities, in addition, vehicle dynamic factors such as mass, a rotation inertia, and an adhesion force between tires and the ground of the electric vehicle 1 are comprehensively considered, and fusion processing is performed according to a fusion algorithm (for example, a Kalman filtering algorithm), to obtain the vehicle speed v of the electric vehicle 1. Optimal estimation may be performed according to the Kalman filtering algorithm based on system uncertainty (for example, measurement noise or a model error), so that the calculated vehicle speed v can perform well in terms of accuracy and stability, thereby ensuring accuracy of determining a total compensation value of the drive system 100 based on the vehicle speed v of the electric vehicle 1, and improving effect of suppressing shaking of the electric vehicle 1.

In an embodiment, a manner of calculating the deceleration a of the electric vehicle 1 according to the fusion algorithm is the same as the manner of calculating the vehicle speed v of the electric vehicle 1. Details are not described herein again.

Because an individual difference between the motors brings an unstable factor to drive control of the motors, when independent drive control is performed on the motors, power output of the motors is likely to be asynchronous. For example, when transmission ratios of the front drive motor 120 and the rear drive motor 130 are the same, power output of the front drive motor 120 is synchronized with that of the rear drive motor 130 when the rotational speed n1 of the front drive motor 120 is synchronized with the rotational speed n2 of the rear drive motor 130. When the torque compensation is independently performed on the front drive motor 120 and the rear drive motor 130, a rotational speed change curve of the front drive motor 120 does not overlap a rotational speed change curve of the rear drive motor 130 in most time periods, and the electric vehicle 1 shakes due to asynchronization between the power output of the front drive motor 120 and that of the rear drive motor 130.

In this embodiment, under an action in which the front drive motor 120 outputs the front drive compensation torque T1 and the rear drive motor 130 outputs the rear drive compensation torque T2, the deceleration a of the electric vehicle 1 decreases to the ideal deceleration a under the comfort braking curve, so that a change curve of the vehicle speed v of the electric vehicle 1 in the final braking stage tends to be smooth, shaking caused by the change of the vehicle speed v of the electric vehicle 1 in the final braking stage is reduced, and precise collaborative control is performed on time points at which the torque compensation starts to be performed on the front drive motor 120 and the rear drive motor 130 and a torque allocation value, to ensure synchronization between the power output of the front drive motor 120 and the power output of the rear drive motor 130. For example, when transmission ratios of the front drive motor 120 and the rear drive motor 130 in FIG. 6 are the same, after the torque compensation is performed on the front drive motor 120 and the rear drive motor 130, the rotational speed change curve of the front drive motor 120 almost overlaps with the rotational speed change curve of the rear drive motor 130, thereby reducing shaking caused by asynchronization between the power output of the motors in the final braking stage of the electric vehicle 1, and improving driving and riding experience of the user. In this way, a trend of moving a center of mass forward during braking of the vehicle and vehicle shaking after the vehicle stops can be alleviated, thereby improving comfort of the vehicle during braking. In addition, the motor controller 110 obtains a signal by directly connecting to the sensor, thereby effectively reducing signal transmission time, reducing a control delay, and reducing a braking distance of the electric vehicle 1.

In an embodiment, at the second moment t2, when the motor controller 110 controls both the front drive motor 120 to output the front drive compensation torque T1 and the rear drive motor 130 to output the rear drive compensation torque T2, to reduce vibration of the electric vehicle 1 caused by load transfer, the suspension controller 410 controls the shock absorber 420 to increase the damping F, and controls an increased value of the damping F of the suspension to increase as a sum (the total compensation torque) of the front drive compensation torque T1 and the rear drive compensation torque T2 increases, so that the suspension system 400 can better suppress vibration of the electric vehicle 1, to further reduce shaking of the electric vehicle 1 in the final braking stage, and improve driving and riding experience of the user.

In this embodiment, when center of gravity distribution of the electric vehicle 1 is stable, or when the difference between the load of the front axle 150 and the load of the rear axle 160 of the electric vehicle 1 is less than the preset difference, the motor controller 110 controls both the front drive motor 120 to output the front drive compensation torque T1 and the rear drive motor 130 to output the rear drive compensation torque T2 at the final braking stage in non-emergency braking, to reduce the deceleration a of the electric vehicle 1. In addition, it can be further ensured that power output effect of the front drive motor 120 is synchronized with that of the rear drive motor 130, so that braking effect of the front wheels is coordinated with that of the rear wheels, and stable and comfortable braking of the electric vehicle 1 is implemented. In addition, during the braking compensation, the suspension controller 410 controls the shock absorber 420 to increase the damping F, thereby further reducing shaking of the electric vehicle 1 in the final braking stage, and improving driving and riding experience of the user.

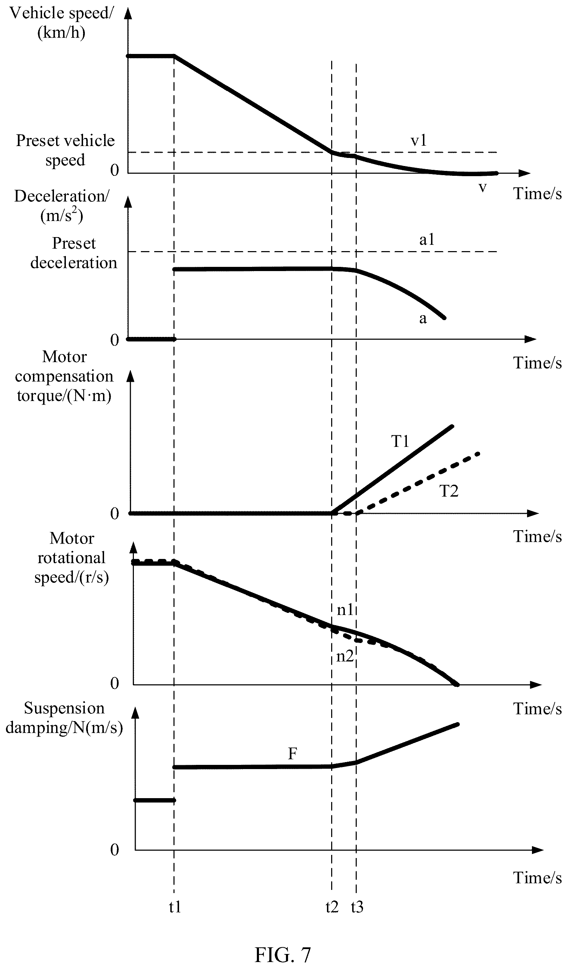

FIG. 7 is another diagram of operating of the braking control process of the electric vehicle 1 according to an embodiment of this application.

At a first moment t1, a user steps down the brake pedal, and the electric vehicle 1 enters a braking process. The brake controller 210 controls the four brake apparatuses to brake the four wheels 140 of the electric vehicle 1, and a vehicle speed v of the electric vehicle 1 decreases under an action of braking forces output by the brake system 200, a rotational speed n1 of the front drive motor 120 and a rotational speed n2 of the rear drive motor 130 decrease as the vehicle speed v of the electric vehicle 1 decreases, and a deceleration a of the electric vehicle 1 during braking increases as the braking forces increase.

At a second moment t2 after the first moment t1, when the deceleration a of the electric vehicle 1 during braking is less than a preset deceleration a1, and the vehicle speed v of the electric vehicle 1 is less than a preset vehicle speed v1, it indicates that the electric vehicle 1 enters a final braking stage in a non-emergency braking mode at the second moment t2.

In an embodiment, during braking of the electric vehicle 1, when the electric vehicle 1 has load transfer, for example, the electric vehicle 1 goes downhill, when the motor controller 110 determines, at the second moment t2, that a variation of a load of the front axle 150 of the electric vehicle 1 is far greater than a variation of a load of the rear axle 160, or a load of the front axle 150 of the electric vehicle 1 is greater than a load of the rear axle 160, a difference between the load of the front axle 150 and the load of the rear axle 160 of the electric vehicle 1 is greater than or equal to a preset difference. To implement stable and comfortable braking of the electric vehicle 1, the motor controller 110 first controls, at the second moment t2, the front drive motor 120 to output front drive compensation torque T1, and then controls both the front drive motor 120 and the rear drive motor 130 to output compensation torque, so that braking effect of front wheels can be coordinated with that of rear wheels while the deceleration a of the electric vehicle 1 is reduced, thereby avoiding excessive forward tilt or backward tilt.

As shown in FIG. 7, in this embodiment, at the second moment t2 after the first moment t1, the motor controller 110 controls the front drive motor 120 to output the front drive compensation torque T1. A direction of the front drive compensation torque T1 is the same as rotational speed directions of the wheels 140 of the electric vehicle 1. A decrease rate of the rotational speed n1 of the front drive motor 120 decreases under an action of the front drive compensation torque T1, and the front drive compensation torque T1 enables the electric vehicle 1 to generate an acceleration, to reduce the deceleration a of the electric vehicle 1.

In an embodiment, at the second moment t2, when the motor controller 110 controls the front drive motor 120 to output the front drive compensation torque T1, to reduce vibration of the electric vehicle 1 caused by load transfer, the suspension controller 410 controls the shock absorber 420 to increase the damping F.

At a third moment t3 after the second moment t2, when the motor controller 110 controls the front drive motor 120 to output the front drive compensation torque T1, the motor controller 110 is further configured to control the rear drive motor 130 to output the rear drive compensation torque T2. At the third moment t3, the decrease rate of the rotational speed n1 of the front drive motor 120 decreases under an action of the front drive compensation torque T1, and the decrease rate of the rotational speed n2 of the rear drive motor 130 decreases under an action of the rear drive compensation torque T2. In addition, the torque compensation is controlled to be performed on both the front drive motor 120 and the rear drive motor 130 at the third moment t3. Compared with that the torque compensation is controlled to be performed only on the front drive motor 120 at the second moment t2, in this method, the decrease rate of the vehicle speed v of the electric vehicle 1 decreases faster, and the deceleration a of the electric vehicle 1 is smaller.

In an embodiment, at the third moment t3, when the motor controller 110 controls both the front drive motor 120 to output the front drive compensation torque T1 and the rear drive motor 130 to output the rear drive compensation torque T2, the suspension controller 410 controls the damping F of the shock absorber 420 at the third moment t3 to be greater than the damping F at the second moment t2, and controls an increased value of the damping F of the suspension to increase as a sum (the total compensation torque) of the front drive compensation torque T1 and the rear drive compensation torque T2 increases, to further reduce shaking of the electric vehicle 1 in the final braking stage, and improve driving and riding experience of the user.

After the first moment t1, if the motor controller 110 detects that the deceleration a of the electric vehicle 1 during braking is less than the preset deceleration a1 and the vehicle speed v of the electric vehicle 1 is less than the preset vehicle speed v1, the motor controller 110 controls the front drive motor 120 to first output the front drive compensation torque T1, and then controls both the front drive motor 120 to output the front drive compensation torque T1 and the rear drive motor 130 to output the rear drive compensation torque T2 after a specific time of the torque compensation performed on the front drive motor 120, so that the torque compensation is performed on both the front drive motor 120 and the rear drive motor 130.

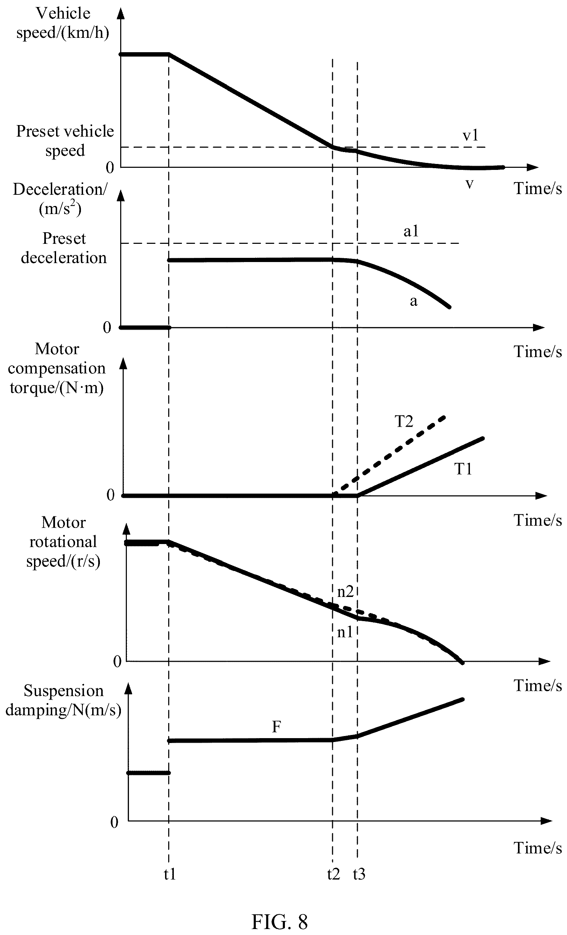

In this embodiment, when the electric vehicle 1 has load transfer, or when a load of the front axle 150 of the electric vehicle 1 is greater than a load of the rear axle 160, the motor controller 110 first controls, at the second moment t2, the front drive motor 120 to output the front drive compensation torque T1, and then controls both the front drive motor 120 and the rear drive motor 130 to output compensation torque, to reduce the deceleration a of the electric vehicle 1, thereby reducing shaking of the electric vehicle 1 caused by a fast change rate of the vehicle speed v in the final braking stage. In addition, it can be further ensured that braking effect of front wheels can be coordinated with that of rear wheels. For example, when transmission ratios of the front drive motor 120 and the rear drive motor 130 in FIG. 8 are the same, after the torque compensation is performed on the front drive motor 120 and the rear drive motor 130, a rotational speed change curve of the front drive motor 120 almost overlaps with a rotational speed change curve of the rear drive motor 130, thereby reducing shaking caused by asynchronization between power output of the motors in the final braking stage of the electric vehicle 1, and implementing stable and comfortable braking of the electric vehicle 1. In addition, during the braking compensation, the suspension controller 410 controls the shock absorber 420 to increase the damping F, so that the suspension system 400 can better suppress vibration of the electric vehicle 1, thereby further reducing shaking of the electric vehicle 1 in the final braking stage, and improving driving and riding experience of the user.

FIG. 8 is still another diagram of operating of the braking control process of the electric vehicle 1 according to an embodiment of this application.

At a first moment t1, a user steps down the brake pedal, and the electric vehicle 1 enters a braking process. The brake controller 210 controls the four brake apparatuses to brake the four wheels 140 of the electric vehicle 1, and a vehicle speed v of the electric vehicle 1 decreases under an action of braking forces output by the brake system 200, a rotational speed n1 of the front drive motor 120 and a rotational speed n2 of the rear drive motor 130 decrease as the vehicle speed v of the electric vehicle 1 decreases, and a deceleration a of the electric vehicle 1 during braking increases as the braking forces increase.

At a second moment t2 after the first moment t1, when the deceleration a of the electric vehicle 1 during braking is less than a preset deceleration a1, and the vehicle speed v of the electric vehicle 1 is less than a preset vehicle speed v1, it indicates that the electric vehicle 1 enters a final braking stage in a non-emergency braking mode at the second moment t2.

In an embodiment, when the electric vehicle 1 has load transfer, for example, the electric vehicle 1 goes uphill, when the motor controller 110 determines, at the second moment t2, that a variation of a load of the rear axle 160 of the electric vehicle 1 is far greater than a variation of a load of the front axle 150, or a load of the rear axle 160 of the electric vehicle 1 is greater than a load of the front axle 150, a difference between the load of the front axle 150 and the load of the rear axle 160 of the electric vehicle 1 is greater than or equal to a preset difference. To implement stable and comfortable braking of the electric vehicle 1, the motor controller 110 first controls, at the second moment t2, the rear drive motor 130 to output rear drive compensation torque T2, and then controls both the front drive motor 120 and the rear drive motor 130 to output compensation torque, so that braking effect of front wheels can be coordinated with that of rear wheels while the deceleration a of the electric vehicle 1 is reduced, thereby avoiding excessive forward tilt or backward tilt.

In an embodiment, because the deceleration a of the electric vehicle 1 decreases when the drive system 100 outputs the total compensation torque, a load of the electric vehicle 1 is transferred relative to the rear axle 160. During braking of the electric vehicle 1, when the electric vehicle 1 travels on a road surface with a low adhesion coefficient (for example, a snow surface or an ice surface), for example, in the process in which the four brake apparatuses brake the four wheels 140 of the electric vehicle 1, when a coefficient of adhesion between the wheels 140 of the electric vehicle 1 and the road surface is less than a preset adhesion coefficient, the motor controller 110 controls the rear drive motor 130 to first output the rear drive compensation torque T2, so that when the load of the rear axle 160 can increase, the two rear wheels can better keep contact with the ground, thereby reducing a possibility of rear wheel slipping and reducing a risk of tailing of the electric vehicle 1.

In this embodiment, in the process in which the four brake apparatuses brake the four wheels 140 of the electric vehicle 1, when the coefficient of adhesion between the wheels 140 of the electric vehicle 1 and the road surface is less than the preset adhesion coefficient, at the second moment t2 after the first moment t1, the motor controller 110 controls the motor controller 110 to control the rear drive motor 130 to output the rear drive compensation torque T2. A direction of the rear drive compensation torque T2 is the same as rotational speed directions of the wheels 140 of the electric vehicle 1. A decrease rate of the rotational speed n2 of the rear drive motor 130 decreases under an action of the rear drive compensation torque T2, and the rear drive compensation torque T2 enables the electric vehicle 1 to generate an acceleration, to reduce the deceleration a of the electric vehicle 1.

In an embodiment, at the second moment t2, when the motor controller 110 controls the rear drive motor 130 to output the front drive compensation torque T1, to reduce vibration of the electric vehicle 1 caused by load transfer, the suspension controller 410 controls the shock absorber 420 to increase the damping F.

At a third moment t3 after the second moment t2, when the motor controller 110 controls the rear drive motor 130 to output the rear drive compensation torque T2, the motor controller 110 is further configured to control the front drive motor 120 to output the front drive compensation torque T1. At the third moment t3, the decrease rate of the rotational speed n1 of the front drive motor 120 decreases under an action of the front drive compensation torque T1, and the decrease rate of the rotational speed n2 of the rear drive motor 130 decreases under an action of the rear drive compensation torque T2. In addition, the torque compensation is controlled to be performed on both the front drive motor 120 and the rear drive motor 130 at the third moment t3. Compared with that the torque compensation is controlled to be performed only on the rear drive motor 130 at the second moment t2, in this method, the decrease rate of the vehicle speed v of the electric vehicle 1 decreases faster, and the deceleration a of the electric vehicle 1 is smaller.

In an embodiment, at the third moment t3, when the motor controller 110 controls both the front drive motor 120 to output the front drive compensation torque T1 and the rear drive motor 130 to output the rear drive compensation torque T2, the suspension controller 410 controls the damping F of the shock absorber 420 at the third moment t3 to be greater than the damping F at the second moment t2, and controls an increased value of the damping F of the suspension to increase as a sum (the total compensation torque) of the front drive compensation torque T1 and the rear drive compensation torque T2 increases, to further reduce shaking of the electric vehicle 1 in the final braking stage, and improve driving and riding experience of the user.

After the first moment t1, if the motor controller 110 detects that the deceleration a of the electric vehicle 1 during braking is less than the preset deceleration a1 and the vehicle speed v of the electric vehicle 1 is less than the preset vehicle speed v1, the motor controller 110 controls the rear drive motor 130 to first output the rear drive compensation torque T2, and then controls both the front drive motor 120 to output the front drive compensation torque T1 and the rear drive motor 130 to output the rear drive compensation torque T2 after a specific time of the torque compensation performed on the rear drive motor 130, so that the torque compensation is performed on both the front drive motor 120 and the rear drive motor 130.

In this embodiment, when the electric vehicle 1 has load transfer, or when a load of the rear axle 160 of the electric vehicle 1 is greater than a load of the front axle 150; or when the electric vehicle 1 travels on a road surface with a low adhesion coefficient (for example, a snow surface or an ice surface), the motor controller 110 first controls, at the second moment t2, the rear drive motor 130 to output the front drive compensation torque T1, and then controls both the front drive motor 120 and the rear drive motor 130 to output compensation torque, to reduce the deceleration a of the electric vehicle 1, thereby reducing shaking of the electric vehicle 1 caused by a fast change rate of the vehicle speed v in the final braking stage. In addition, it can be further ensured that braking effect of front wheels can be coordinated with that of rear wheels. For example, when transmission ratios of the front drive motor 120 and the rear drive motor 130 in FIG. 8 are the same, after the torque compensation is performed on the front drive motor 120 and the rear drive motor 130, a rotational speed change curve of the front drive motor 120 almost overlaps with a rotational speed change curve of the rear drive motor 130, thereby reducing shaking caused by asynchronization between power output of the motors in the final braking stage of the electric vehicle 1, and implementing stable and comfortable braking of the electric vehicle 1. In addition, during the braking compensation, the suspension controller 410 controls the shock absorber 420 to increase the damping F, so that the suspension system 400 can better suppress vibration of the electric vehicle 1, thereby further reducing shaking of the electric vehicle 1 in the final braking stage, and improving driving and riding experience of the user.

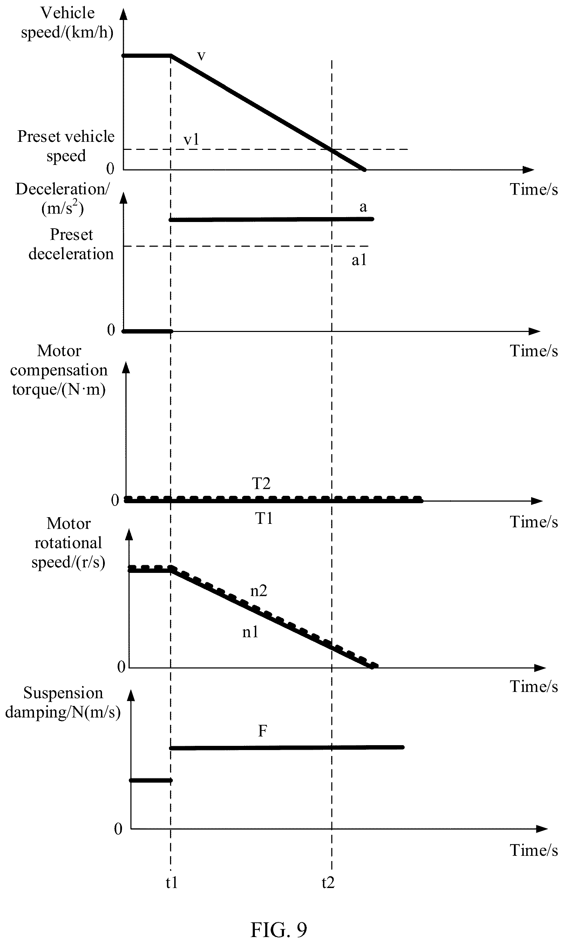

FIG. 9 is a diagram of operating of the electric vehicle 1 in the emergency braking mode according to an embodiment of this application.

In an embodiment, after a first moment t1, in response to a deceleration a of the electric vehicle 1 during braking being greater than or equal to a preset deceleration a1, a sum of front drive compensation torque T1 output by the front drive motor 120 and rear drive compensation torque T2 output by the rear drive motor 130 is controlled to be zero.

In an embodiment, after the first moment t1, in response to a pedal stroke of the brake pedal being greater than or equal to a preset stroke, a sum of front drive compensation torque T1 output by the front drive motor 120 and rear drive compensation torque T2 output by the rear drive motor 130 is controlled to be zero.

In an embodiment, after the first moment t1, in response to a decrease rate of a rotational speed n1 of the front drive motor 120 and/or a rotational speed n2 of the rear drive motor 130 being greater than or equal to a preset decrease rate, a sum of front drive compensation torque T1 output by the front drive motor 120 and rear drive compensation torque T2 output by the rear drive motor 130 is controlled to be zero.

Specifically, during braking of the electric vehicle 1, the motor controller 110 is configured to receive a braking signal from the brake controller 210. During braking, when the deceleration a of the electric vehicle 1 is greater than or equal to the preset deceleration a1; or the pedal stroke of the brake pedal is greater than the preset stroke; or the decrease rate of the rotational speed n1 of the front drive motor 120 and/or the rotational speed n2 of the rear drive motor 130 is greater than or equal to the preset decrease rate, it indicates that a braking mode of the electric vehicle 1 is the emergency braking mode in this case.

When the electric vehicle 1 is in the emergency braking mode, to ensure braking efficiency and braking safety of the electric vehicle 1, the motor controller 110 controls the sum of the front drive compensation torque T1 output by the front drive motor 120 and the rear drive compensation torque T2 output by the rear drive motor 130 to be zero, so that a braking force of the electric vehicle 1 during braking always maintains a braking value indicated by the brake controller 210, and the suspension controller 410 controls an increased value of the damping F of the shock absorber 420 to be 0. In other words, in the emergency braking mode, the braking solution provided in this application to reduce shaking of the electric vehicle 1 in the final braking stage does not operate.

It should be understood that a value change in FIG. 6 to FIG. 9 is merely an example, does not represent a specific value, and may have a specific deviation. A change trend of the value is merely used to describe a method procedure in the solution of this application, and does not limit a deviation in an actual control process.

In this embodiment, during braking of the electric vehicle 1, when the deceleration a of the electric vehicle 1 is greater than or equal to the preset deceleration a1, it indicates that the braking mode of the electric vehicle 1 is emergency braking. In the emergency braking mode, it needs to be ensured that the electric vehicle 1 stops moving within a distance as short as possible, to avoid dangers such as collision and out-of-control of the electric vehicle 1. When the braking mode of the electric vehicle 1 is emergency braking, braking efficiency and braking safety of the electric vehicle 1 need to be ensured. Therefore, in this case, the vehicle controller does not control the front drive motor 120 and the rear drive motor 130 to output the compensation torque, thereby ensuring braking efficiency and braking safety of the electric vehicle 1.

In embodiments provided in this application, functional modules may be integrated into one device, or each of the modules may exist alone physically, or two or more modules are integrated into one device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method for seamless braking to stop of an electric vehicle, wherein the control method is used to control a front drive motor and a rear drive motor of the electric vehicle during braking of the electric vehicle, to reduce shaking of the electric vehicle during braking, and the control method comprises:

controlling, at a first moment, four brake apparatuses of the electric vehicle to brake four wheels of the electric vehicle; and

after the first moment, in a process in which the four brake apparatuses brake the four wheels of the electric vehicle, controlling the front drive motor to output front drive compensation torque, and controlling the rear drive motor to output rear drive compensation torque, wherein directions of the front drive compensation torque and the rear drive compensation torque are the same as rotational speed directions of the wheels of the electric vehicle.

2. The control method according to claim 1, wherein at a second moment after the first moment, a deceleration of the electric vehicle during braking is less than a preset deceleration and a vehicle speed is less than a preset vehicle speed.

3. The control method according to claim 1, wherein at a second moment after the first moment, a decrease rate of a rotational speed of the front drive motor and/or the rear drive motor is less than a preset decrease rate, and the rotational speed of the front drive motor and/or the rear drive motor is less than a preset rotational speed.

4. The control method according to any one of claims 1 to 3, wherein the control method specifically comprises:
controlling, at the second moment after the first moment, both the front drive motor to output the front drive compensation torque and the rear drive motor to output the rear drive compensation torque.

5. The control method according to any one of claims 1 to 3, wherein the control method specifically comprises:

controlling, at the second moment after the first moment, the front drive motor to output the front drive compensation torque; and
controlling, at a third moment after the second moment, the rear drive motor to output the rear drive compensation torque.

6. The control method according to any one of claims 1 to 3, wherein the control method specifically comprises:

controlling, at the second moment after the first moment, the rear drive motor to output the rear drive compensation torque; and
controlling, at a third moment after the second moment, the front drive motor to output the front drive compensation torque, wherein
in the process in which the four brake apparatuses brake the four wheels of the electric vehicle, a coefficient of adhesion between the wheels of the electric vehicle and a road surface is less than a preset adhesion coefficient.

7. The control method according to any one of claims 1 to 6, wherein the control method specifically comprises: in response to braking forces output by the four brake apparatuses to two front wheels being greater than braking forces output by the four brake apparatuses to two rear wheels during braking, controlling, after the first moment, the front drive compensation torque output by the front drive motor to be greater than the rear drive compensation torque output by the rear drive motor.

8. The control method according to any one of claims 1 to 6, wherein the control method specifically comprises:
in response to braking forces output by the four brake apparatuses to two rear wheels being greater than braking forces output by the four brake apparatuses to two front wheels during braking, controlling, after the first moment, the rear drive compensation torque output by the rear drive motor to be greater than the front drive compensation torque output by the front drive motor.

9. The control method according to claim 1, wherein the control method specifically comprises:

after the first moment, in a braking process in which the electric vehicle decelerates at a first deceleration, controlling the front drive motor to output first front drive compensation torque, and controlling the rear drive motor to output first rear drive compensation torque; and
after the first moment, in a braking process in which the electric vehicle decelerates at a second deceleration, controlling the front drive motor to output second front drive compensation torque, and controlling the rear drive motor to output second rear drive compensation torque, wherein
the first deceleration is less than the second deceleration, and a sum of the first front drive compensation torque and the first rear drive compensation torque is less than a sum of the second front drive compensation torque and the second rear drive compensation torque.

10. The control method according to any one of claims 1 to 9, wherein the control method further comprises:
controlling a suspension to increase damping at the second moment after the first moment.

11. The control method according to claim 10, wherein the control method specifically comprises:

controlling a damping increased value of the suspension to increase as a sum of the front drive compensation torque and the rear drive compensation torque increases.

12. The control method according to any one of claims 1 to 11, wherein the control method specifically comprises:

after the first moment, in response to the deceleration of the electric vehicle during braking being greater than or equal to the preset deceleration, controlling the sum of the front drive compensation torque output by the front drive motor and the rear drive compensation torque output by the rear drive motor to be zero.

13. A vehicle controller for seamless braking to stop control of an electric vehicle, wherein the vehicle controller is configured to control a front drive motor of the electric vehicle to output torque to drive two front wheels of the electric vehicle and control a rear drive motor of the electric vehicle to output torque to drive two rear wheels of the electric vehicle, and the vehicle controller is specifically configured to:

during braking of the electric vehicle, in response to a deceleration of the electric vehicle being less than a preset deceleration and a vehicle speed of the electric vehicle being less than a preset vehicle speed, control the front drive motor to output the front drive compensation torque, and control the rear drive motor to output the rear drive compensation torque.

14. The vehicle controller according to claim 13, wherein the vehicle controller is specifically configured to:

during braking of the electric vehicle, in response to the deceleration of the electric vehicle being less than the preset deceleration and the vehicle speed of the electric vehicle being less than the preset vehicle speed, control both the front drive motor to output the front drive compensation torque and the rear drive motor to output the rear drive compensation torque.

15. An electric vehicle, wherein the electric vehicle comprises a front drive motor, a rear drive motor, and the vehicle controller according to either of claims 13 and 14, and the vehicle controller is configured to control the front drive motor and the rear drive motor to perform the control method according to any one of claims 1 to 12.

FIG. 1

FIG. 2

140

LF

150

Front drive
motor 120

140

RF

Motor
controller 110

140

LR

Rear drive
motor 130

140

RR

160

FIG. 3(a)

FIG. 3(b)

FIG. 3(c)

```
┌─────────────┐
│   Inertial  │
│ measurement │
│    unit     │
│     530     │
└─────────────┘
       │
Acceleration
   signal
       │
       ▼
┌─────────────┐                                                    ┌──────────────────────────────────┐
│   Vehicle   │   Front drive torque          Front drive torque   │     Front drive motor 120        │
│  control    │   control instruction    control signal            │                                  │
│    unit     │ ──────────────────────►  ───────────────────────►  │  ┌────────────────────────────┐  │
│    510      │   Rear drive torque      Front drive torque signal  │  │    Rotational speed        │  │
│             │   control instruction    ◄──────────────────────    │  │ measurement unit 521       │  │
│             │ ◄── Front drive rotational  Front drive rotational   │  └────────────────────────────┘  │
│             │     speed signal         ┌──────────┐   speed signal └──────────────────────────────────┘
│             │ ◄── Rear drive rotational │  Motor   │
│             │     speed signal         │controller│   Rear drive torque  ┌──────────────────────────────────┐
└─────────────┘                          │   110    │   control signal     │      Rear drive motor 130        │
                                         │          │ ─────────────────►   │                                  │
                                         │          │   Rear drive         │  ┌────────────────────────────┐  │
                                         │          │   torque signal      │  │    Rotational speed        │  │
                                         │          │ ◄───────────────     │  │ measurement unit 522       │  │
                                         │          │   Rear drive rotational │  └────────────────────────────┘  │
                                         │          │   speed signal       └──────────────────────────────────┘
                                         └──────────┘
   Damping signal
                    ┌─────────────┐
                    │ Suspension  │   Damping          ┌──────────────────────────────────┐
Damping control     │ controller  │   control signal   │       Shock absorber 420         │
instruction         │    410      │ ───────────────►   │                                  │
                    │             │   Damping signal   │  ┌────────────────────────────┐  │
                    │             │ ◄───────────────   │  │    Pressure sensor 540     │  │
                    └─────────────┘                    │  └────────────────────────────┘  │
                                                       └──────────────────────────────────┘
```

FIG. 4

Inertial measurement unit 530

Acceleration signal

Vehicle control unit 510

Acceleration signal

Brake signal

Motor controller 110

Front drive torque control signal

Front drive torque signal

Front drive rotational speed signal

Front drive motor 120

Rotational speed measurement unit 521

Rear drive torque control signal

Rear drive torque signal

Rear drive rotational speed signal

Rear drive motor 130

Rotational speed measurement unit 522

Damping control instruction

Damping signal

Suspension controller 410

Damping control signal

Damping signal

Shock absorber 420

Pressure sensor 540

FIG. 5

FIG. 6

FIG. 7

FIG. 8

FIG. 9

Europäisches
Patentamt

European
Patent Office

Office européen
des brevets

## EUROPEAN SEARCH REPORT

**Application Number**

EP 25 22 4987

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 922 328 A (NISSAN MOTOR) 8 November 2024 (2024-11-08) | 1-9, 12-15 | INV. B60L3/00 |
| Y | * paragraphs [0023], [0024], [0045], [0138]; figures 1,3,12,21 * ----- | 10,11 | B60L7/08 B60L7/26 B60L15/20 |
| Y | JP 2005 028934 A (NISSAN MOTOR) 3 February 2005 (2005-02-03) * the whole document * ----- | 10,11 | |

**TECHNICAL FIELDS SEARCHED (IPC)**

B60L

The present search report has been drawn up for all claims

| Place of search | Date of completion of the search | Examiner |
|---|---|---|
| The Hague | 20 April 2026 | Lucas Mariscal, A |

EPO FORM 1503 03.82 (P04C01)

## ANNEX TO THE EUROPEAN SEARCH REPORT
## ON EUROPEAN PATENT APPLICATION NO.

EP 25 22 4987

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2026

| Patent document cited in search report | | Publication date | Patent family member(s) | | Publication date |
|---|---|---|---|---|---|
| CN 118922328 | A | 08-11-2024 | CN | 118922328 A | 08-11-2024 |
| | | | EP | 4494913 A1 | 22-01-2025 |
| | | | JP | 7794291 B2 | 06-01-2026 |
| | | | JP | WO2023175993 A1 | 21-09-2023 |
| | | | US | 2025115135 A1 | 10-04-2025 |
| | | | WO | 2023175993 A1 | 21-09-2023 |
| JP 2005028934 | A | 03-02-2005 | NONE | | |

EPO FORM P0459

For more details about this annex : see Official Journal of the European Patent Office, No. 12/82